# EUROPEAN PATENT SPECIFICATION

(11) **EP 2 067 823 B1**
(45) Date of publication and mention of the grant of the patent: **22.03.2017**
(21) Application number: 08170417.3
(22) Date of filing: 02.12.2008
(51) Int. Cl.: C08L 71/00

(54) **High-performance polymer blends, compositions and shaped articles made therefrom**
Hochleistungs-Polymermischungen, Zusammensetzungen und daraus geformte Artikel
Mélanges de polymères haute performance, compositions et articles formés fabriqués à partir de ceux-ci

(30) Priority: 04.12.2007 IN CH28922007
(43) Date of publication of application: 10.06.2009
(73) Proprietor: SOLVAY SA, 1120 Bruxelles (BE)
(72) Inventor: Trivedi, Prakash Druman, 480025, Mumbai (IN); Mehta, Nikunj, Ghod Dod Road 395001, Gujrat (IN); Stern, Brian A., Duluth, GA Georgia 30097 (US); El-Hibri, Mohammad Jamal, Atlanta, GA Georgia 30328 (US); Ireland, Daniel J., Kernerville NC 27284 (US)
(74) Representative: Vande Gucht, Anne

(56) References cited:
- WO-A-2007/035402
- WO-A-2007/078737
- US-A- 5 205 968

## Description

The present invention relates to high-performance polymer blends, and to compositions and shaped articles made therefrom.

### BACKGROUND OF THE INVENTION

Poly(etheretherketone)s (PEEKs) offer an excellent thermal stability, very high stiffness and strength, and really excellent chemical resistance, including excellent resistance to environmental stress rupture resistance. On the other hand, they are have a rather low heat deflection temperature, which may limit their operating temperature.
SUPRADEL^{®} poly(biphenyletherdisulfone)s, i.e. homopolymers the recurring units of which are 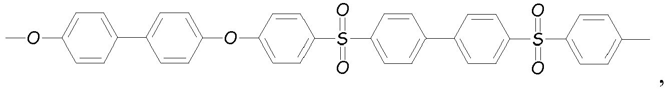 were commercially lauched by SOLVAY ADVANCED POLYMERS at Kunstoffe 2004. They represent a breakthrough in the field of sulfone polymers. Indeed, these high glass transition temperature sulfone polymers are highly appreciated because of their outstanding heat resistance, dimensional stability, good chemical resistance and mechanical integrity up to operating temperature of about 250°C. Unfortunately, these high glass transition temperature sulfone polymers suffer from a low flowability, and are rather expensive.

Polymer blends have been widely taught and employed in the art. As broad as this statement may be, the blending of polymers remains an empirical art and the selection of polymers for a blend giving special properties is, in the main, an Edisonian-like choice. Certain attributes of polymer blends are more unique than others. The more unique attributes when found in a polymer blend tend to be unanticipated properties. According to Zoller and Hoehn, Journal of Polymer Science, Polymer Physics Edition, vol. 20, pp. 1385-1397 (1982) :
*"Blending of polymers is a useful technique to obtain properties in thermoplastic materials not readily achieved in a single polymer. Virtually all technologically important properties can be improved in this way, some of the more important ones being flow properties, mechanical properties (especially impact strength), thermal stability, and price (...)*. *Ultimately, the goal of such modeling and correlation studies should be the prediction of blend properties from the properties of the pure components alone. We are certainly very far from achieving this goal. "*

In spite of extensive studies already conducted on polymer blends, there is still a need for high-performance polymer blends, which would substantially combine the benefitial properties of the poly(etheretherketone)s and the SUPRADEL^{®}-type poly(biphenyletherdisulfone)s. Desirably, the new polymer blends should also be as cost-attractive as possible.

This need, and still other ones, are surprisingly met by the polymer blend (B) as detailed below.

### SUMMARY OF THE INVENTION

The subject-matter of the present invention is defined in claims 1-16 as attached.

Generally said, an aspect of the invention concerns a polymer blend (B) consisting of :
- at least one poly(aryletherketone) (P1), and
- at least one high glass temperature sulfone polymer (P2).

Good results are obtained when the poly(aryletherketone) (P1) is a poly(etheretherketone) (P1⁺) of which more than 50 wt. % of the recurring units are 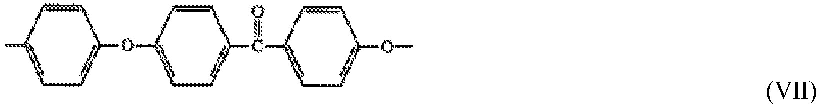 and the high glass temperature sulfone polymer (P2) is a poly(arylethertrisulfone)-poly(biphenyletherdisulfone) copolymer (P2⁺) of which more than 50 wt. % of the recurring units are a mix (M67) consisting of arylethertrisulfone recurring units of one or more formulae of the general type : 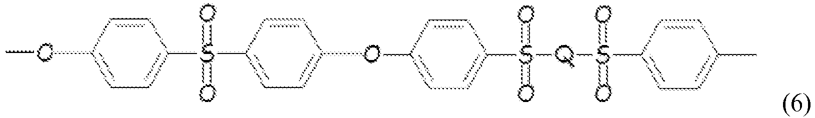 and biphenyletherdisulfone recurring units of one or more formulae of the general type : 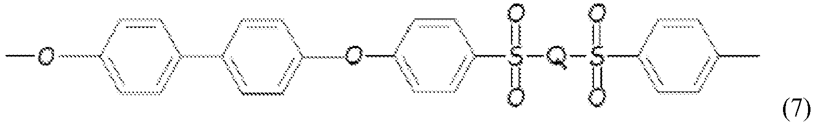 Q being a divalent group comprising at least one C₆-C₃₀ arylene segment;
Q being preferably of the general formula

-Ar(-X)ₐ₁(-Ar')ₐ₂-

wherein :
- Ar and Ar', equal or different, are C₆-C₃₀ arylene segments, said C₆-C₃₀ arylene segments being themselves preferably selected from p-phenylene, p-biphenylene and p-triphenylene;
- X is O, S, C(=O), S(=O)₂, C≡C, CH=CH, C₁-C₆ alkylene such as CH₂ and C(CH₃)₂, C₁-C₆ perfluoroalkylene such as CF₂ and C(CF₃)₂, or partially fluorinated C₁-C₆ alkylene;
- a₁ is an integer equal to 0 or 1;
- a₂ = 0 when a₁ = 0 and a₂ is an integer equal to 0 or 1 when a₁ = 1, and wherein the weight amount of the recurring units (6) contained in the mix (M67), based on the total amount of the recurring units (6) and (7) of which the mix (M67) consists, ranges from 52 % to 98 %. Hereinafter, "polymer blend (B+)" is intended to denote the polymer blend (B) wherein the poly(aryletherketone) (P1) is the poly(etheretherketone) (P1+) and the high glass temperature sulfone polymer (P2) is the poly(arylethertrisulfone)-poly(biphenyletherdisulfone) copolymer (P2+).

Excellent results are obtained when the poly(aryletherketone) (P1) is a poly(etheretherketone) homopolymer (P1⁺⁺) of which essentially all, if not all, the recurring units are 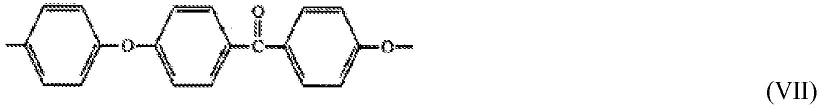 and the high glass temperature sulfone polymer (P2) is a poly(arylethertrisulfone)-poly(biphenyletherdisulfone) copolymer (P2⁺⁺) of which essentially all, if not all, the recurring units are a mix (M23) consisting of arylethertrisulfone recurring units of formula 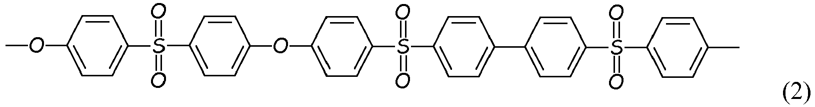 and biphenyletherdisulfone recurring units of formula 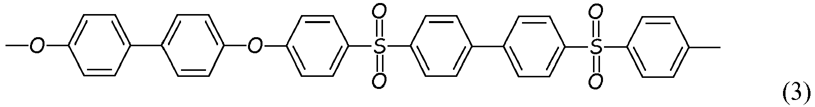 wherein the weight amount of the recurring units (2) contained in the mix (M23), based on the total amount of the recurring units (2) and (3) of which the mix (M23) consists, ranges from 75 % to 95 %, preferably from 87 % to 92 %. Hereinafter, "polymer blend (B⁺⁺)" is intended to denote the polymer blend (B) wherein the poly(aryletherketone) (P1) is the poly(etheretherketone) (P1⁺⁺) and the high glass temperature sulfone polymer (P2) is the poly(arylethertrisulfone)-poly(biphenyletherdisulfone) copolymer (P2⁺⁺).

Another aspect of the present invention concerns a polymer composition (C*) consisting of:
- the polymer blend (B), and
- at least one ingredient other than the poly(aryletherketone) (P1) and the high glass temperature sulfone polymer (P2).

PCT patent application PCT/EP2007/056603 (so far unpublished), describes a polymer composition (C**) comprising :
- at least one poly(aryletherketone) (P1),
- at least one poly(biphenylethersulfone), wherein the poly(biphenylether-sulfone) may be a high glass temperature sulfone polymer falling under the general definition of the high glass temperature sulfone polymer (P2) of the presently invented polymer blend (B), and
- at least one fibrous carbon nanofiller (N).

Thus, still another aspect of the present invention concerns a polymer composition (C) consisting of:
- the polymer blend (B).
- at least one ingredient other than the poly(aryletherketone) (P1) and the high glass temperature sulfone polymer (P2),
with the proviso that the polymer composition (C) is free of fibrous carbon nanofiller (N).

Still another aspect of the present invention concerns a shaped article consisting of one or more parts, at least one part of the shaped article consisting of the polymer blend (B). The shaped article may consist of several parts, only one of them consisting of the polymer blend (B). The shaped article may consist of several parts, several but not all of them consisting of the polymer blend (B). The shaped article may consist of several parts, all of them consisting of the polymer blend (B). The shaped article may consist of one part, said part consisting of the polymer blend (B).

Still another aspect of the present invention concerns a shaped article consisting of one or more parts, at least one part of the shaped article consisting of the polymer composition (C). The shaped article may consist of several parts, only one of them consisting of the polymer composition (C). The shaped article may consist of several parts, several but not all of them consisting of the polymer composition (C). The shaped article may consist of several parts, all of them consisting of the polymer composition (C). The shaped article may consist of one part, said part consisting of the polymer composition (C).

### DETAILED DESCRIPTION OF THE INVENTION

The weight of the poly(aryletherketone) (P1), based on the total weight of the polymer blend (B) [i.e. the combined weight of the poly(aryletherketone) (P1) and the high glass temperature sulfone polymer (P2)], may be notably of at least 1 %, at least 2 %, at least 5 %, at least 10 %, at least 15 %, at least 20 %, at least 25 %, at least 30 %, at least 35 %, at least 40 %, at least 45 %, at least 50 %, at least 55 %, at least 60 %, at least 65 %, at least 70 %, at least 75 %, at least 80 %, at least 85 %, at least 90 %, at least 95 %, at least 98 % or at least 99 %. On the other hand, the weight of the poly(aryletherketone) (P1), based on the total weight of the polymer blend (B), may be notably of at most 99 %, at most 98 %, at most 95 %, at most 90 %, at most 85 %, at most 80 %, at most 75 %, at most 70 %, at most 65 %, at most 60 %, at most 55 %, at most 50 %, at most 45 %, at most 40 %, at most 35 %, at most 30 %, at most 25 %, at most 20 %, at most 15 %, at most 10 %, at most 5 %, at most 2 % or at most 1 %.

The weight of the poly(aryletherketone) (P1), based on the total weight of the polymer blend (B), is generally of above 30 %, preferably above 50 %, more preferably above 55 % and still more preferably above 57,5 %. On the other hand, the weight of the poly(aryletherketone) (P1), based on the total weight of the polymer blend (B), is generally below 80 %, preferably below 70 %, more preferably below 65 % and still more preferably below 62,5 %.

The weight of the polymer blend (B), based on the total weight of the polymer composition (C), may be notably of at least 1 %, at least 2 %, at least 5 %, at least 10 %, at least 15 %, at least 20 %, at least 25 %, at least 30 %, at least 35 %, at least 40 %, at least 45 %, at least 50 %, at least 55 %, at least 60 %, at least 65 %, at least 70 %, at least 75 %, at least 80 %, at least 85 %, at least 90 %, at least 95 %, at least 98 % or at least 99 %. On the other hand, the weight of the polymer blend (B), based on the total weight of the polymer composition (C), may be notably of at most 99 %, at most 98 %, at most 95 %, at most 90 %, at most 85 %, at most 80 %, at most 75 %, at most 70 %, at most 65 %, at most 60 %, at most 55 %, at most 50 %, at most 45 %, at most 40 %, at most 35 %, at most 30 %, at most 25 %, at most 20 %, at most 15 %, at most 10 %, at most 5 %, at most 2 % or at most 1 %.

In a certain preferred embodiment, the weight of the polymer blend (B), based on the total weight of the polymer composition (C) is above 50 %, preferably above 60 %, and more preferably above 65 %. On the other hand, in this preferred embodiment, the weight of the polymer blend (B), based on the total weight of the polymer composition (C), is advantageously below 90 %, preferably below 80 %, more preferably below 75 %.

Acording to this preferred embodiment, the polymer composition (C) may consist of the polymer blend (B), of at least one fibrous filler, and, optionally in addition, of one or more ingredient(s) other than the poly(aryletherketone) (P1), the high glass temperature sulfone polymer (P2) and the fibrous filler. The weight of the fibrous filler, based on the total weight of the polymer composition (C), ranges preferably between 5 % and 55 %, preferably from 15 % to 45 %, and more preferably from 25 % to 35 %. The weight of the other ingredient(s), based on the total weight of the polymer composition (C), ranges preferably from 0 to 10 %, preferably from 0 to 5 %, and more preferably from 0 to 1 %. The fibrous filler may be glass fiber, or carbon fiber, or a mixture thereof.

Still according to this preferred embodiment, the polymer composition (C) consists of the polymer blend (B), of glass fiber, and, optionally in addition, of one or more ingredient(s) other than the poly(aryletherketone) (P1), the high glass temperature sulfone polymer (P2) and glass fiber. The other ingredient(s) may include or may consist of at least one heat stabilizer. The heat stabilizer is preferably zinc oxide. The weight of glass fiber, based on the total weight of the polymer composition (C), ranges preferably between 5 % and 55 %, preferably from 15 % to 45 %, and more preferably from 25 % to 35 %. The weight of the other ingredient(s), based on the total weight of the polymer composition (C), ranges preferably from 0 to 10 %, preferably from 0 to 5 %, and more preferably from 0 to 1 %. The weight of zinc oxide, based on the total weight of the polymer composition (C), ranges preferably from 0 to 10 %, preferably from 0.05 to 0.50 %, and more preferably from 0.10 to 0.30 %.

Still according to this preferred embodiment, the polymer composition (C) consists of the polymer blend (B), of carbon fiber, and, optionally in addition, of one or more ingredient(s) other than the poly(aryletherketone) (P1), the high glass temperature sulfone polymer (P2) and carbon fiber. The carbon fiber may be PAN-based carbon fiber and/or pitch-based carbon fiber. The weight of carbon fiber, based on the total weight of the polymer composition (C), ranges preferably between 5 % and 55 %, preferably from 15 % to 45 %, and more preferably from 25 % to 35 %. The weight of the other ingredient(s), based on the total weight of the polymer composition (C), ranges preferably from 0 to 10 %, preferably from 0 to 5 %, and more preferably from 0 to 1 %.

It goes without saying that all the above limitations and preferences apply, mutatis mutandis, to the polymer (P1) = (P1⁺) and the polymer (P2) = (P2⁺) of the polymer blend (B⁺), and to the polymer blend (B⁺) itself when being incorporated into the polymer composition (C), as well as to the polymer (P1) = (P1⁺⁺) and the polymer (P2) = (P2⁺⁺) of the polymer blend (B⁺⁺), and to the polymer blend (B⁺⁺) itself when being incorporated into the polymer composition (C).

For example, the weight of the polymer (P1⁺⁺), based on the total weight of the polymer blend (B⁺⁺), may be notably of at least 1 %, at least 2 %, at least 5 %, at least 10 %, at least 15 %, at least 20 %, at least 25 %, at least 30 %, at least 35 %, at least 40 %, at least 45 %, at least 50 %, at least 55 %, at least 60 %, at least 65 %, at least 70 %, at least 75 %, at least 80 %, at least 85 %, at least 90 %, at least 95 %, at least 98 % or at least 99 %. On the other hand, the weight of the polymer (P1⁺⁺), based on the total weight of the polymer blend (B⁺⁺), may be notably of at most 99 %, at most 98 %, at most 95 %, at most 90 %, at most 85 %, at most 80 %, at most 75 %, at most 70 %, at most 65 %, at most 60 %, at most 55 %, at most 50 %, at most 45 %, at most 40 %, at most 35 %, at most 30 %, at most 25 %, at most 20 %, at most 15 %, at most 10 %, at most 5 %, at most 2 % or at most 1 %.

The weight of the polymer (P1⁺⁺), based on the total weight of the polymer blend (B⁺⁺), is generally of above 30 %, preferably above 50 %, more preferably above 55 % and still more preferably above 57,5 %. On the other hand, the weight of the polymer (P1⁺⁺), based on the total weight of the polymer blend (B⁺⁺), is generally below 80 %, preferably below 70 %, more preferably below 65 % and still more preferably below 62,5 %.

The weight of the polymer blend (B⁺⁺), based on the total weight of the polymer composition (C), may be notably of at least 1 %, at least 2 %, at least 5 %, at least 10 %, at least 15 %, at least 20 %, at least 25 %, at least 30 %, at least 35 %, at least 40 %, at least 45 %, at least 50 %, at least 55 %, at least 60 %, at least 65 %, at least 70 %, at least 75 %, at least 80 %, at least 85 %, at least 90 %, at least 95 %, at least 98 % or at least 99 %.

In a preferred embodiment, the weight of the polymer blend (B⁺⁺), based on the total weight of the polymer composition (C) is above 50 %, preferably above 60 %, and more preferably above 70 %. On the other hand, in this preferred embodiment, the weight of the polymer blend (B⁺⁺), based on the total weight of the polymer composition (C), is advantageously below 90 %, preferably below 80 %, more preferably below 75 %.

90 %, preferably below 80 %, more preferably below 75 %.

Still according to this preferred embodiment, the polymer composition (C) consists of the polymer blend (B⁺⁺), of glass fiber, and, optionally in addition, of at least one heat stabilizer.

### The poly(aryletherketone) (P1)

As previously mentioned, the polymer composition (C) comprises at least one poly(aryletherketone) (P1).

For the purpose of the present invention, the term "poly(aryletherketone)" is intended to denote any polymer of which more than 50 wt. % of the recurring units are recurring units (R1) of one ore more of the following formulae : 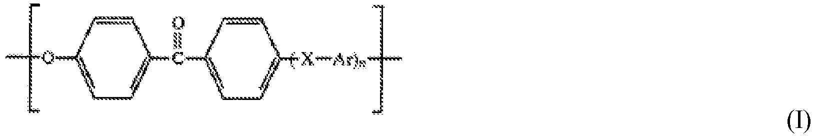 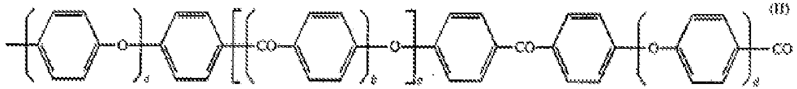 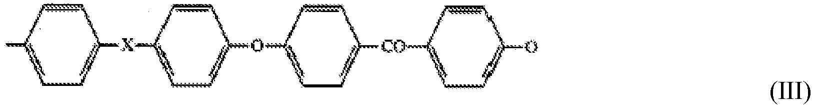 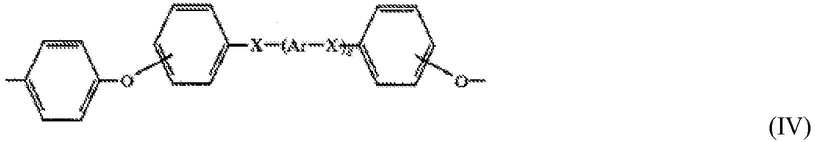 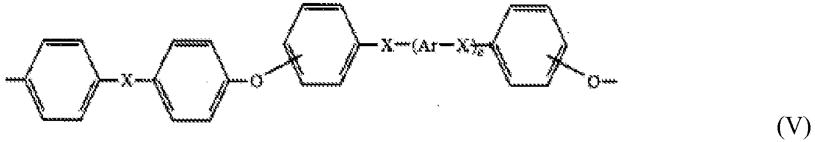 wherein :
- Ar is independently a divalent aromatic group selected from phenylene, biphenylene or naphthylene,
- X is independently O, C(=O) or a direct bond,
- n is an integer of from 0 to 3,
- b, c, d and e are 0 or 1,
- a is an integer of 1 to 4, and
- preferably, d is 0 when b is 1.

Recurring units (R1) may notably be chosen from : 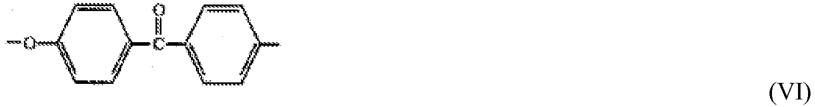 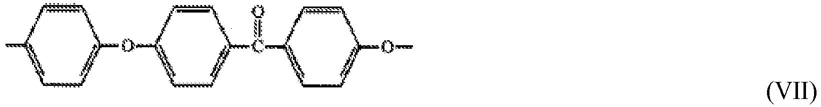 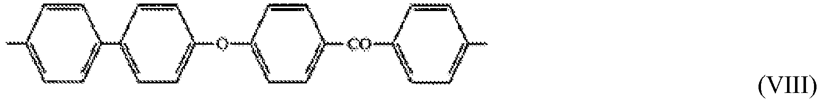 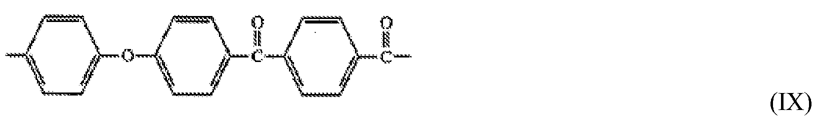 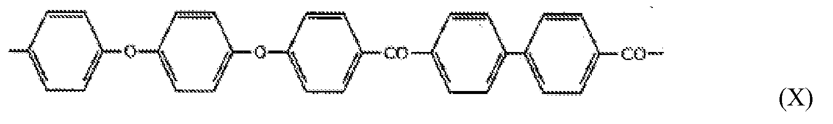 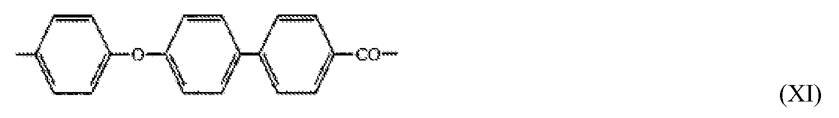 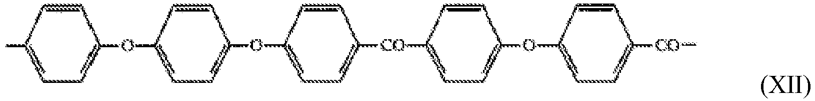 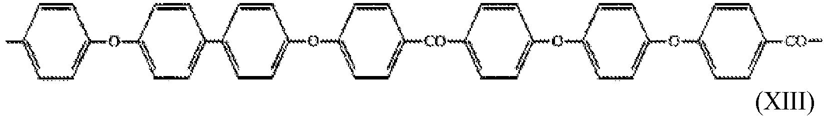 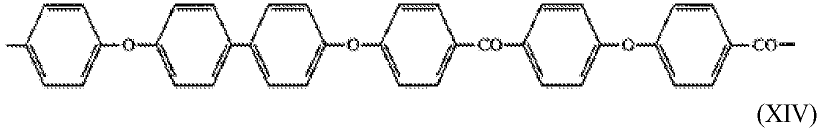 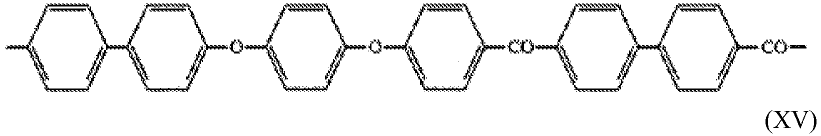 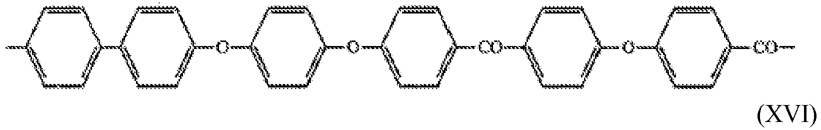 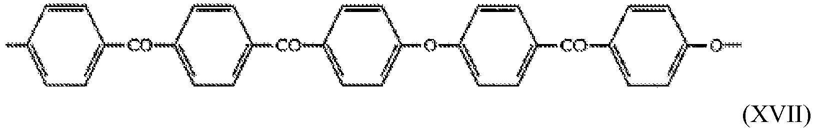 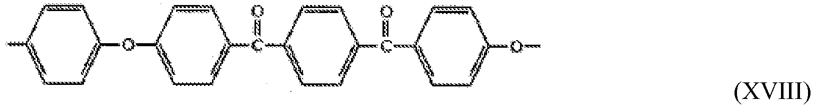 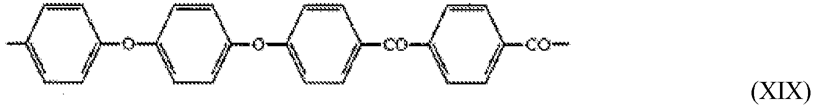 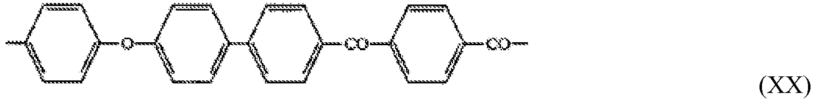 and

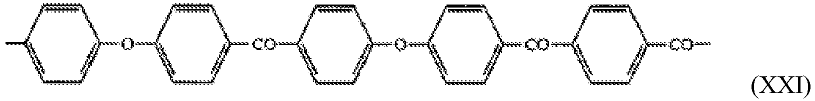

Preferably, recurring units (R1) are :

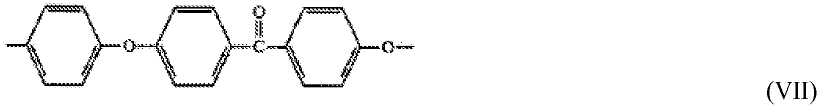

Preferably more than 90 wt. % of the recurring units of the poly(aryletherketone) (P1⁺) are recurring units (R1). More preferably, essentially all the recurring units of the poly(aryletherketone) (P1⁺) are recurring units (R1). Still more preferably, all the recurring units of the poly(aryletherketone) (P1) are recurring units (R1).

Good results are obtained when the poly(aryletherketone) (P1) is a poly(etheretherketone) (P1⁺), i.e. a polymer of which more than 50 wt. % of the recurring units are

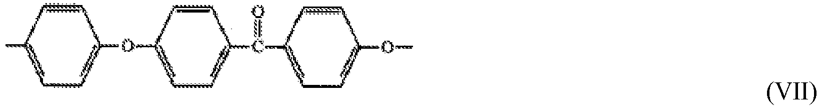

Excellent results are obtained when the poly(aryletherketone) (P1) is a poly(etheretherketone) homopolymer (P1⁺⁺), i.e. a polymer of which essentially all, if not all, the recurring units are

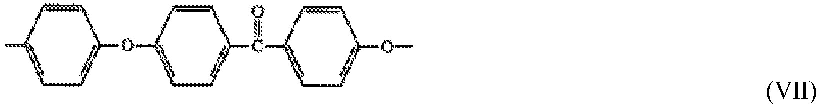

VICTREX^{®} 150 P and VICTREX^{®} 450 P PEEKs from Victrex Manufacturing Ltd., KETASPIRE^{®} and GATONE^{®} PEEKs from Solvay Advanced Polymers, L.L.C. are examples of poly(etheretherketone) homopolymers.

The poly(aryletherketone) (P1), in particular the poly(etheretherketone) (P1⁺) or the poly(etheretherketone) (P1⁺⁺), has advantageously a reduced viscosity (RV) of at least 0.60 dl/g, as measured in 95-98 % sulfuric acid (d = 1.84 g/ml) at a poly(aryletherketone) concentration of 1 g/100 ml. The measurement is performed using a No 50 Cannon-Fleske viscometer. RV is measured at 25°C in a time less than 4 hours after dissolution, to limit sulfonation. The RV of the poly(aryletherketone) (P1) is preferably of at least 0.65 dl/g, more preferably of 0.70 dl/g. Besides, the RV of the poly(aryletherketone) (P1) is advantageously of at most 1.20 dl/g, preferably at most 1.10 and still more preferably at most 10 dl/g.

The poly(aryl ketone) (P1), in particular the poly(etheretherketone) (P1⁺) or (P1⁺⁺), can be prepared by any method.

One well known in the art method contains reacting a substantially equimolar mixture of at least one bisphenol and at least one dihalobenzoid compound or at least one halophenol compound as described in Canadian Pat. No. 847,963. Non limitative example of bisphenols useful in such a process are hydroquinone, 4,4'-dihydroxybiphenyl and 4,4'-dihydroxybenzophenone; non limitative examples of dihalobenzoid compounds useful in such a process are 4,4'-difluorobenzophenone, 4,4'-dichlorobenzophenone and 4-chloro-4'-fluorobenzophenone; non limitative examples of halophenols compounds useful in such a process are 4-(4-chlorobenzoyl)phenol and (4-fluorobenzoyl)phenol. Accordingly, PEEK homopolymers may notably be produced by the nucleophilic process as described in, for example, U.S. Pat. No. 4,176,222, the whole content of which is herein incorporated by reference.

Another well known in the art method to produce PEEK homopolymers comprises electrophilically polymerizing (4'-phenoxy)-4-phenoxybenzoic acid acid, as described in U.S. Pat. 6,566,484, the whole content of which is herein incorporated by reference. Other poly(aryletherketone)s may be produced by the same method, starting from other monomers than phenoxyphenoxybenzoic acid , such as those described in U.S. Pat. Appl. 2003/0130476, the whole content of which is also herein incorporated by reference, and/or 3-phenoxybenzoic acid, 4-phenoxybenzoic acid, (4'-phenoxy)-3-phenoxybenzoic acid, (2'-phenyl)-4-phenoxybenzoic acid, and (2'-methoxy)-4-phenoxybenzoic acid.

In a certain preferred embodiment, the poly(aryletherketone) (P1) is a poly(etheretherketone) homopolymer (P1⁺⁺) prepared by a method comprising electrophilically auto-polycondensing (4'-phenoxy)-4-phenoxybenzoic acid.

In another preferred embodiment, the poly(aryletherketone) (P1) is a poly(etheretherketone) homopolymer (P1⁺⁺) prepared by a method comprising nucleophilically polycondensing hydroquinone with a dihalobenzophenone, in particular difluorobenzophenone.

The polymer blend (B) can comprise one and only one poly(aryletherketone) (P1). Alternatively, it can comprise two, three, or even more than three poly(aryletherketone)s (P1).

### The high glass temperature sulfone polymer (P2)

For the purpose of the invention, a high glass temperature sulfone polymer is intended to denote a polycondensation polymer of which more than 50 wt. % of the recurring units are recurring units (R2) of one or more formulae of the general type : 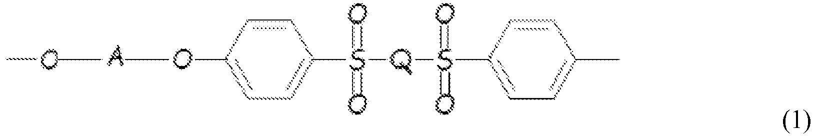 wherein **A** and **Q**, equal or different, are divalent groups comprising at least one C₆-C₃₀ arylene segment.

Preferably, **A** is a divalent group of the general formula

-Ar(-X)ₐ₁(-Ar')ₐ₂-

wherein :
- Ar and Ar', equal or different, are C₆-C₃₀ arylene segments, said C₆-C₃₀ arylene segments being themselves preferably selected from p-phenylene, p-biphenylene and p-triphenylene;
- X is O, S, C(=O), S(=O)₂, C≡C, CH=CH, C₁-C₆ alkylene such as CH₂ and C(CH₃)₂, C₁-C₆ perfluoroalkylene such as CF₂ and C(CF₃)₂, or partially fluorinated C₁-C₆ alkylene;
- a₁ is an integer equal to 0 or 1;
- a₂ = 0 when a₁ = 0 and a₂ is an integer equal to 0 or 1 when a1 = 1.

Non limitative examples of divalent groups **A** are chosen among the following structures : 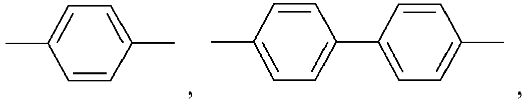 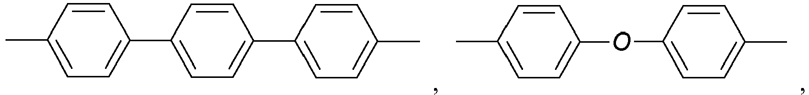 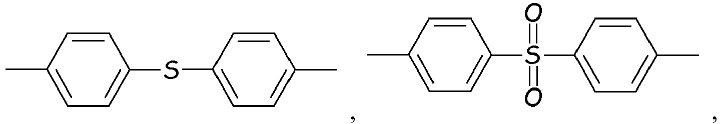 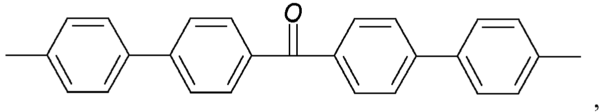 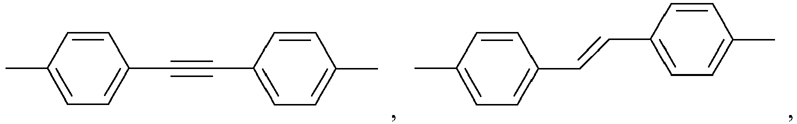 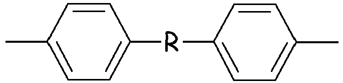 with R being : 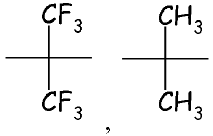 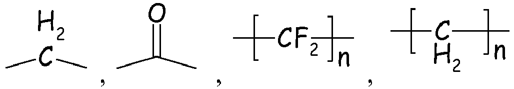 with n = integer from 1 to 6, or an aliphatic divalent group, linear or branched, of up to 6 carbon atoms; and mixtures thereof.

Preferably, **Q** is a divalent group of the general formula

-Ar(-X)ₐ₁(-Ar')ₐ₂-

wherein :
- Ar and Ar', equal or different, are C₆-C₃₀ arylene segments, said C₆-C₃₀ arylene segments being themselves preferably selected from p-phenylene, p-biphenylene and p-triphenylene;
- X is O, S, C(=O), S(=O)₂, C≡C, CH=CH, C₁-C₆ alkylene such as CH₂ and C(CH₃)₂, C₁-C₆ perfluoroalkylene such as CF₂ and C(CF₃)₂, or partially fluorinated C₁-C₆ alkylene;
- a₁ is an integer equal to 0 or 1;
- a₂ = 0 when a₁ = 0 and a₂ is an integer equal to 0 or 1 when a₁ = 1.

Non limitative examples of divalent groups **Q** are chosen among the following structures : 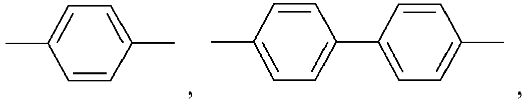 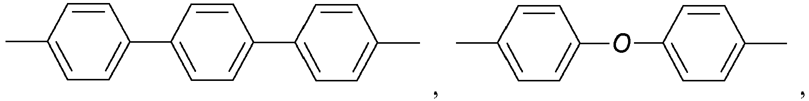 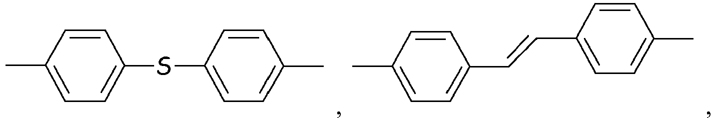 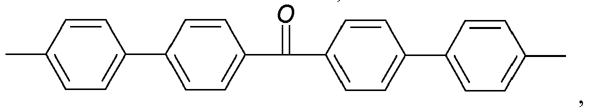 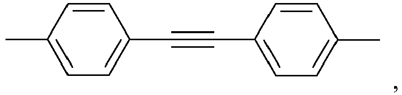 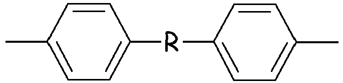 with **R** being : 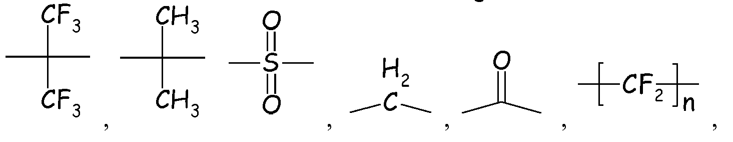 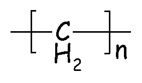 with n = integer from 1 to 6, or an aliphatic divalent group, linear or branched, of up to 6 carbon atoms;
and mixtures thereof.

In a certain particular embodiment of the present invention, the recurring units (R2) are 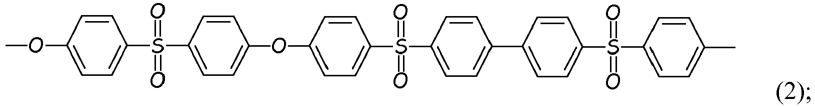 and the high glass temperature sulfone polymer (P2) may be notably a homopolymer of which essentially all, if not all, the recurring units are recurring units (2).

In a certain other particular embodiment of the present invention, the recurring units (R2) are 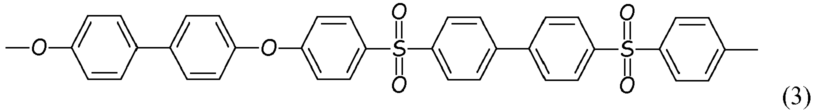 and the high glass temperature sulfone polymer (P2) may be notably a homopolymer of which essentially all, if not all, the recurring units are recurring units (3). Excellent results were obtained when using a homopolymer of recurring units (3) as the high glass temperature sulfone polymer (P2).

In a certain still other particular embodiment of the present invention, the recurring units (R2) are 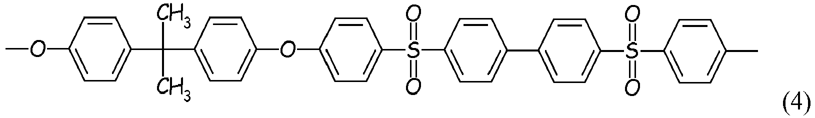 and the high glass temperature sulfone polymer (P2) may be notably a homopolymer of which essentially all, if not all, the recurring units are recurring units (4).

In a certain still other particular embodiment of the present invention, the recurring units (R2) are 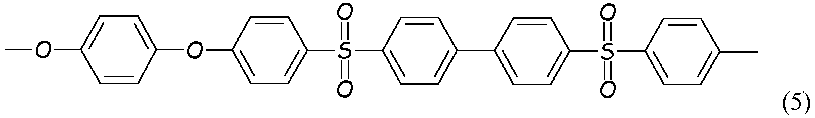 and the high glass temperature sulfone polymer (P2) may be notably a homopolymer of which essentially all, if not all, the recurring units are recurring units (5).

Preferably, the recurring units (R2) are a mix (M67) consisting of arylethertrisulfone recurring units of one or more formulae of the general type : 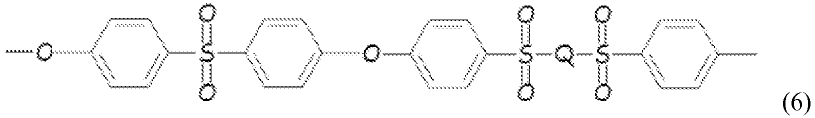 and biphenyletherdisulfone recurring units of one or more formulae of type general type : 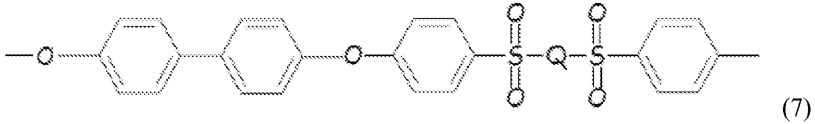 **Q** being a divalent group as above defined.

The weight amount of the recurring units (6) contained in the mix (M67), based on the total amount of the recurring units (6) and (7) of which the mix consists, may be notably of at least 1 %, at least 2 %, at least 5 %, at least 10 %, at least 20 %, at least 30 %, at least 40 %, at least 60 %, at least 70 %, at least 80 %, at least 85%, at least 90 %, at least 95 %, at least 98 % or at least 99 %. On the other hand, it may be notably of at most 1 %, at most 2 %, at most 5 %, at most 10 %, at most 15 %, at most 20 %, at most 30 %, at most 40 %, at most 60 %, at most 80 %, at most 70 %, at most 90 %, at most 95 %, at most 98 % or at most 99 %.

The weight amount of the recurring units (6) contained in the mix (M67), based on the total amount of the recurring units (6) and (7) of which the mix consists, ranges usually from 52 % to 98 %. It is preferably of at least 75 %, and more preferably of at least 87 %. On the other hand, it is preferably of at most 95 %, more preferably of at most 92 %, and still more preferably at most 90 %.

More preferably, the recurring units (R2) are a mix (M23) consisting of arylethertrisulfone recurring units of formula 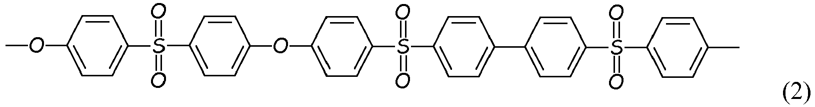 and biphenyletherdisulfone recurring units of formula

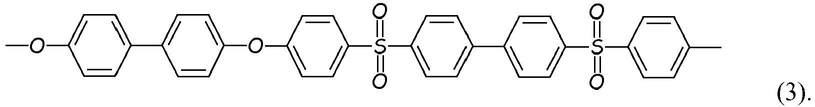

The weight amount of the recurring units (2) contained in the mix (M23), based on the total amount of the recurring units (2) and (3) of which the mix consists, may be notably of at least 1 %, at least 2 %, at least 5 %, at least 10 %, at least 20 %, at least 40 %, at least 60 %, at least 80 %, at least 85%, at least 90 %, at least 95 %, at least 98 % or at least 99 %. On the other hand, it may be notably of at most 1 %, at most 2 %, at most 5 %, at most 10 %, at most 15 %, at most 20 %, at most 40 %, at most 60 %, at most 80 %, at most 90 %, at most 95 %, at most 98 % or at most 99 %.

The weight amount of the recurring units (2) contained in the mix (M23), based on the total amount of the recurring units (2) and (3) of which the mix (M23) consists, ranges usually from 52 % to 98 %, preferably from 75 % to 95 %, and more preferably from 87 % to 92 %.

Good results are obtained when the high glass temperature sulfone polymer (P2) is a poly(arylethertrisulfone)-poly(biphenyletherdisulfone) copolymer (P2⁺) of which more than 50 wt. % of the recurring units are a mix (M67) consisting of arylethertrisulfone recurring units of one or more formulae of the general type : 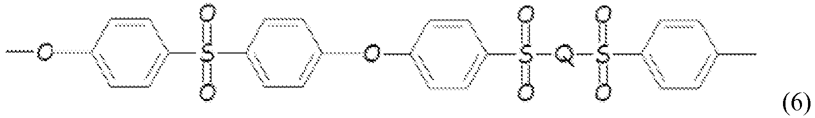 and biphenyletherdisulfone recurring units of one or more formulae of the general type : 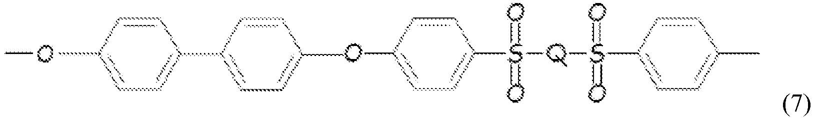 **Q** being a divalent group comprising at least one C₆-C₃₀ arylene segment, and being preferably of the general formula

-Ar(-X)ₐ₁(-Ar')ₐ₂-

wherein :
- Ar and Ar', equal or different, are C₆-C₃₀ arylene segments, said C₆-C₃₀ arylene segments being themselves preferably selected from p-phenylene, p-biphenylene and p-triphenylene;
- X is O, S, C(=O), S(=O)₂, C≡C, CH=CH, C₁-C₆ alkylene such as CH₂ and C(CH₃)₂, C₁-C₆ perfluoroalkylene such as CF₂ and C(CF₃)₂, or partially fluorinated C₁-C₆ alkylene;
- a₁ is an integer equal to 0 or 1;
- a₂ = 0 when a₁ = 0 and a₂ is an integer equal to 0 or 1 when a₁ = 1,
wherein the weight amount of the recurring units (6) contained in the mix (M67), based on the total amount of the recurring units (6) and (7) of which the mix (M67) consists, ranges from 52 % to 98 %.

The poly(arylethertrisulfone)-poly(biphenyletherdisulfone) copolymer (P2⁺) may notably be a random, alternating or block copolymer.

Excellent results are obtained when the high glass temperature sulfone polymer (P2) is a poly(arylethertrisulfone)-poly(biphenyletherdisulfone) copolymer (P2⁺⁺) of which essentially all, if not all, the recurring units are a mix (M23) consisting of arylethertrisulfone recurring units of formula 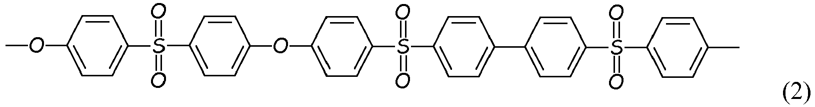 and biphenyletherdisulfone recurring units of formula 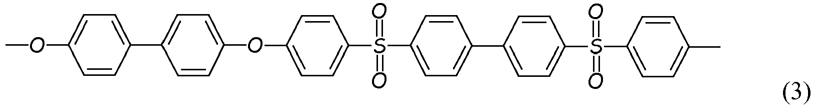 wherein the weight amount of the recurring units (2) contained in the mix (M23), based on the total amount of the recurring units (2) and (3) of which the mix (M23) consists, ranges from 75 % to 95 %, preferably from 87 % to 92 %.

The poly(arylethertrisulfone)-poly(biphenyletherdisulfone) copolymer (P2⁺⁺) may notably be a random, alternating or block copolymer.

The poly(arylethertrisulfone)-poly(biphenyletherdisulfone) copolymer (P2⁺⁺) is advantageously obtainable, and is possibly obtained, by a method comprising nucleophilically polycondensing a 4,4'-bis[(4-halogenophenylsulfonyl)]-1,1'-biphenyl, in particular 4,4'-bis[(4-chlorophenylsulfonyl)]-1,1'-biphenyl, with a mix of diols consisting of 4,4'-dihydroxydiphenylsulfone and 4,4'-dihydroxybiphenyl. The 4,4'-bis[(4-halogenophenylsulfonyl)]-1,1'-biphenyl may be reacted simultaneously with 4,4'-dihydroxydiphenylsulfone and with 4,4'-dihydroxybiphenyl, or at different times. In a cetain particular embodiment, the poly(arylethertrisulfone)-poly(biphenyletherdisulfone) copolymer (P2⁺⁺) is obtainable, and is possibly obtained, by a process comprising the steps of:
(a) preparing a poly(arylethertrisulfone) homoblock of which essentially all, if not all, the recurring units are of formula 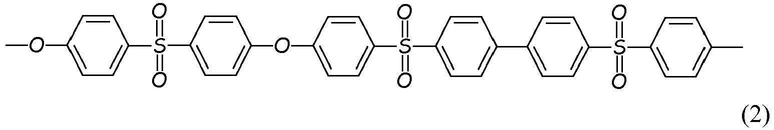 by reacting 4,4'-dihydroxydiphenylsulfone and/or a 4,4'-dialkoxydiphenylsulfone with a 4,4'-bis[(4-halogenophenylsulfonyl)]-1,1'-biphenyl
(b) preparing a poly(biphenyletherdisulfone) homoblock of which essentially all, if not all, the recurring units are of formula 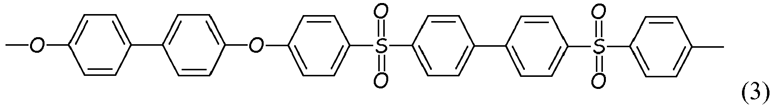 by reacting 4,4'-dihydroxybiphenyl and/or a 4,4'-dialkoxybiphenyl with a 4,4'-bis[(4-halogenophenylsulfonyl)]-1,1'-biphenyl
(c) reacting the aforesaid homoblocks together so as to obtain the copolymer (P2⁺⁺), optionally followed by end-capping it, and
(d) recovering the copolymer (P2⁺⁺).

Such a process is described in U.S. Patent Applications 10/897,405 and PCT/EP2006/066824, the whole content of which is herein incorporated by reference.

It has been surprisingly found that using a mix consisting of recurring units (6) and (7) [in particular, using a mix consisting of recurring units (2) and (3)], wherein the weight amount of the recurring units (6) contained in the mix (M67), based on the total amount of the recurring units (6) and (7) of which the mix (M23) consists, may be as high as 52 %, 75 %, 85 %, 90 % and more, makes it possible to prepare polymer blends (B) and compositions (C) in accordance with the present invention which exhibit an outstanding level of properties, substantially the same or even the same as the level of properties achieved with other polymer blends (B) and compositions (C), also in accordance with the invention, but which contain a polymer (P2) the sole recurring units (R2) of which are recurring units (7), in particular recurring units (3). Since polymers (P2) of which the recurring units (R2) are a mix consisting of recurring units (6) and (7) can be synthesized at a substantially more attractive cost than polymers (P2) of which the recurring units (R2) are solely recurring units (7), substantially more cost-attractive polymer blends (B) and compositions of matter (C) can be manufactured (the higher the amount of recurring units (6) in the mix, the more cost-attractive the polymer (P2) is).

In a particular embodiment of the invention, the polymer (P2) further comprises recurring units other than recurring units (R2). These ones may be notably chosen from arylethermonosulfone units of general formula : 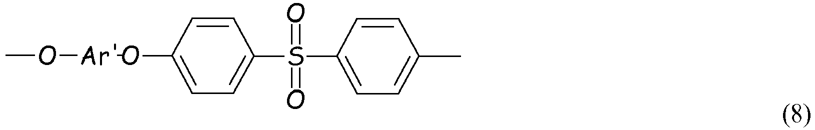 wherein Ar' is a divalent group free of S(=O)₂ group, and comprising at least one C₆-C₃₀ arylene segment. Non limitative examples thereof are :

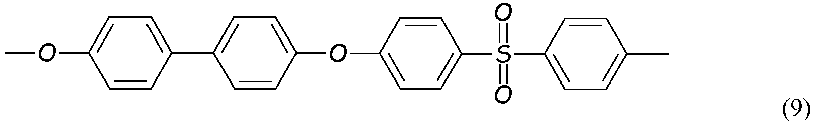

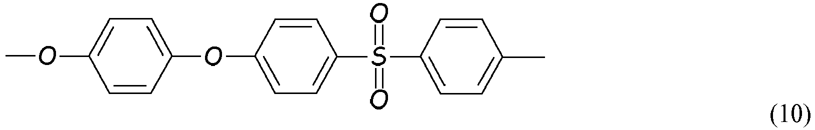

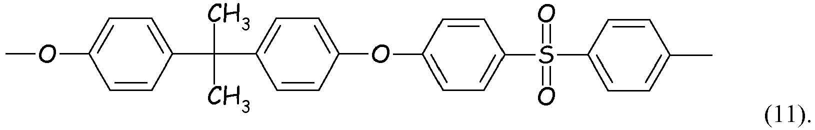

Recurring units other than recurring units (R2) may also be aryletherdisulfone units of formula

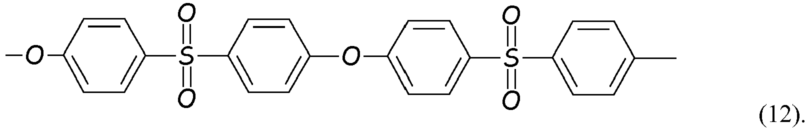

The polymer (P2) has a glass transition temperature advantageously of at least about 240°C, and preferably of at least about 250°C. In addition, polymer (P) has a glass transition temperature of advantageously at most about 275°C.

The polymer (P2) is advantageously amorphous.

### The polymer composition (C*).

The polymer composition (C*) contains at least one ingredient other than the poly(aryletherketone) (P1) and the high glass temperature sulfone polymer (P2).

In particular, the polymer composition (C*) may contain at least one fibrous carbon nanofiller (N).

The fibrous carbon nanofiller (N) is a "carbon" nanofiller in that consists of nanoparticles comprising elemental carbon. Generally, more than 90 wt. % of the nanoparticles consist of elemental carbon. More than 50 wt. % of the elemental carbon are in the graphitic form.

From a practical point of view, any particle is three-dimensional, and can thus be characterized notably by three characteristic dimensions ("length", "width" and "height"). However, some particles are such that two of their characteristic dimensions are considerably lower than respectively the third one. The terms "considerably lower" should generally be understood as "more than 10 times lower", and preferably as "more than 100 times lower". The fibrous carbon nanofiller (N) is "fibrous" in that it consists of nanoparticles having the shape of a fiber, i.e. particles of which two out of their characteristic dimensions ("thickness-width" and "thickness-height") are, in average (in number), considerably lower than their third one ("length"); insofar as the "thickness-width" is often close to the "thickness-height" of the fibrous nanoparticles and that the base of the fibrous nanoparticles often looks like a circle, the "thickness-width" and the "thickness-height" are commonly globalized by the skilled person in a unique parameter, namely the diameter of the fiber.

Finally, the fibrous carbon nanofiller (N) is a "nanofiller" in the sense that the number average "thickness-width" and the number average "thickness-height" of the nanoparticles, or in an easier and commonly used way, the number average diameter is generally below 1000 nm.

The number average diameter and the number average length of the carbon nanoparticles can be determined by any technique known from the skilled in the art; advantageously, an electronic microscopy technique coupled with a software image analysis technique will be used.

Usually, the fibrous carbon nanofiller is chosen from carbon nanotubes, vapor grown carbon fibers and carbon nanohorns.

The polymer composition (C*) may contains at least one ingredient other than the poly(aryletherketone) (P1), the high glass temperature sulfone polymer (P2) and the fibrous carbon nanofiller (N). These other ingredients are identical to those listed below for the polymer composition (C).

### The polymer composition (C).

The polymer composition (C) contains at least one ingredient other than the poly(aryletherketone) (P1) and the high glass temperature sulfone polymer (P2), and it is free of fibrous carbon nanofiller (N), as above defined.

The ingredient other than the poly(aryletherketone) (P1) and the high glass temperature sulfone polymer (P2) may be notably selected from the group consisting of fibrous fillers other than fibrous nanofillers such as glass fibers, PAN-based carbon fibers and pitch-based carbon fibers, fibrous nanofillers other than fibrous carbon nanofillers, lubricating and/or anti-wear agents such as polytetrafluoroethylene and silicone oil, anti-static agents, extenders, organic and/or inorganic pigments like TiO₂ and ZnS, carbon black, acid scavengers, such as MgO, heat stabilizers (for example metal oxides and sulfides such as zinc oxide and zinc sulfide), antioxidants, light stabilizers e.g. UV stabilizers, gamma-ray stabilizers, flame retardants, smoke-suppressing agents, platty fillers such as talc, acicular fillers such as wollastonite, particulate fillers and nucleating agents such as talc, mica, titanium dioxide, and kaolin; and mixtures thereof.

### End uses.

As previously mentioned, other aspects of the present invention concern a shaped article consisting of one or more parts, at least one part of the shaped article consisting of the polymer blend (B) on one hand, and a shaped article consisting of one or more parts, at least one part of the shaped article consisting of the polymer composition (C) on the other hand.

Among shaped articles in accordance with the present invention, at least one part thereof consists of the the polymer blend (B) or the polymer composition (C), it can be cited notably :
- injection molded articles;
- extruded articles, including films, fibers, sheet stocks, rod stocks, tubings and profiles;
- compression molded articles;
- valve components and related parts such seal rings;
- compressor or pump components including plate valves, ring valves, and poppets for suction and discharge components on air compressor, refrigeration compressors, and reciprocating compressors including LPG, ammonia, chlorine, HCl, ethylene, propylene and others;
- gaskets, back up rings or other sealing component, especially for use in a downhole environment of oil/gas production;
- electronic components, especially one used in a surface mount type circuit assembly for its ability to withstand IR reflow solder temperatures; specific electronic components include hard drive platter components and head components;
- components used in semi-conductor manufacturing, such as cell cassettes and chip carrier trays; these components are typically electro-statically dissipative (ESD) e.g. through the addition of carbon fibers or other conductive additives;
- components used in semi-conductor test equipment including test sockets and burn-in sockets;
- fittings and/or couplings used in fluid delivery systems in the chemical process industry or in other industries where hot harsh chemicals and/or steam are present;
- articles used for cookware or bakeware, suitable for use in both a microwave as well as a conventional oven;
- downhole abrasion tapes and flexible riser abrasion tapes;
- under-the-hood automotive components that are exposed to high heat;
- lighting articles, such as lighting sockets and LED frames and housings;
- thermally dissipative heat sinks, for example in computers; these formulations would typically incorporate a thermally conductive filler such as pitch-based carbon fiber;
- aerospace electrical and electronic connector components and housings;
- friction and wear components such as bushings, bearings and thrust washers;
- gears and other mechanical drive components;
- electrical and electronic wire and cable insulation and coatings.

### First set of examples.

We used :
- a poly(etheretherketone) homopolymer, synthesized by a method comprising electrophilically polymerizing (4'-phenoxy)-4-phenoxybenzoic acid acid, commercially available in powder form as GATONE® PEEK 5300 from SOLVAY SPECIALITIES INDIA Private Ltd., and
- a poly(arylethertrisulfone)-poly(biphenyletherdisulfone) copolymer of which essentially all, if not all, the recurring units are a mix (M23) consisting of arylethertrisulfone recurring units of formula 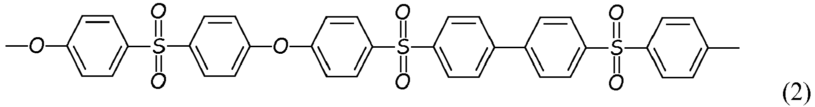 and biphenyletherdisulfone recurring units of formula 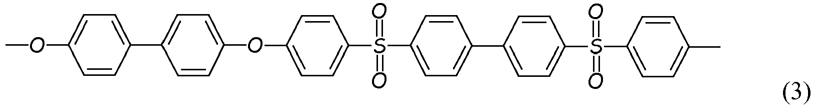 wherein the weight amount of the recurring units (2) contained in the mix (M23), based on the total amount of the recurring units (2) and (3) of which the mix (M23) consists, is of about 90 %, said poly(arylethertrisulfone)-poly(biphenyletherdisulfone) copolymer being commercially available as GAFONE^{®} T-PSS 6300 from SOLVAY SPECIALITIES INDIA Private Ltd.

Polymer blend (E1) (according to the invention). 50 parts of the GATONE^{®} PEEK 5300 poly(etheretherketone) were blended with 50 parts by weight of the GAFONE^{®} T-PSS 6300 poly(arylethertrisulfone)-poly(biphenyletherdisulfone) copolymer in a lab mixer and extruded in a Berstoff ZE-25, a co-rotating twin screw extruder equipped with a two-strand die. The temperature of the barrel was kept at about 330°C to 370°C and the screw rpm was kept at 220. The strands coming out of the extruder were passed through a cooling water trough and pelletized. The pellets obtained were dried at 180°C in hot air oven for 2 hours before injection molding.

Standard test specimens were obtained by injection molding using an LTM Demag (DC-60 NC4K) injection molding machine. The resulting polymer blend was found to be translucent.

Glass transition temperature (T_{g}) and Melting Temperature (Tm) were measured using a differential scanning calorimeter (DSC) (TA Instruments DSC 2910). Two Tg's were detected for the polymer blend, at 171°C and 266°C, respectively. The melting point (Tₘ) for the polymer blend was 338°C.

Heat deflection temperature (HDT) was tested using Heat deflection temperature tester (CEAST HDT Junior) according to ASTM D648. The samples were annealed at 180°C for 3 hours and then conditioned for 24 hours at room temperature (25 +/- 2°C). HDT for the polymer blend was 185°C.

Notched Izod Impact Strength was measured using Impact Tester (CEAST Resil 25) according to ASTM D 256. The specimens had a notch angle of 45° and a notch depth of 2.54 mm. The samples were conditioned at room temperature (25 +/- 2°C) for 48 hours before testing. Izod Impact Strength for this composition was 54 J/m. The complete test results for this composition are shown in Table 1.

Polymer blend (E2) (according to the invention). Another polymer blend was prepared using the procedures as described above except for a polymer blend ratio of 75:25 for poly(etheretherketone) : poly(arylethertrisulfone)-poly(biphenyletherdisulfone) copolymer. The test results obtained for this other polymer blend are also shown in Table 1.

Controls. Neat GAFONE^{®} T-PSS 6300 poly(arylethertrisulfone)-poly(biphenyletherdisulfone) copolymer and neat GATONE^{®} PEEK 5300 poly(etheretherketone) and were further tested as controls, hereinafter, controls (R1) and (R2).

**Table 1**

| Mechanical and thermal properties of the GATONE^{®} PEEK 5300 - GAFONE^{®} T-PSS 6300 blends | | | | | | | | | | |
|---|---|---|---|---|---|---|---|---|---|---|
| Polymer materials | Specific gravity (g/cm³) | Tensile strength (MPa) | Tensile modulus (MPa) | Elongation at break (%) | Flexural strength (MPa) | Flexural modulus (MPa) | % Yield Strain | ISO Impact (KJ/m²) | ASTM Impact (J/m) | Heat Deflection Temperature (°C) |
| GATONE^{®} PEEK 5300 [Control (R2)] | 1.273 | 87 | 3729 | 85 | 122 | 3182 | 6.9 | 3.8 | 27 | 150 |
| Polymer blend (E2) | 1.299 | 89 | 3380 | 100 | 125 | 3058 | 7 | 2.6 | 51 | 182 |
| Polymer blend (E1) | 1.312 | 89 | 2837 | 70 | 121 | 2780 | 8 | 3 | 54 | 185 |
| GAFONE^{®} T-PSS 6300 [Control (R1)] | 1.343 | 91 | 2437 | 16 | 117 | 2670 | 8.7 | 6.3 | 60 | 240 |

### Second set of examples.

We used :
- a poly(etheretherketone) homopolymer synthesized by a method comprising nucleophilically polycondensing hydroquinone with difluorobenzophenone, commercially available as VICTREX® 150 P PEEK from VICTREX Manufacturing Ltd., and,
- a poly(biphenyletherdisulfone) homopolymer of which essentially all, if not all, the recurring units are 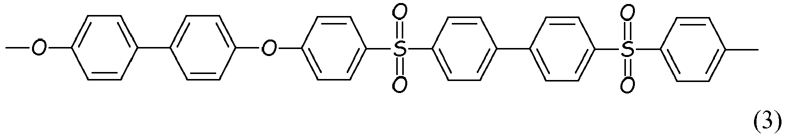 commercially available as SUPRADEL^{®} HTS-2601P from SOLVAY ADVANCED POLYMERS, L.L.C.

Glass fiber reinforced polymer compositions comprising VICTREX^{®} 150 P PEEK poly(etheretherketone) homopolymer and SUPRADEL^{®} HTS-2601P poly(biphenyletherdisulfone) homopolymer were compounded as detailed hereafter.

The poly(etheretherketone) homopolymer and the poly(biphenyletherdisulfone) homopolymer were fed at the feed zone (barrel 1) to a 40:1 L/D Berstorff 25 mm co-rotating intermeshing twin-screw extruder using two gravimetric feeders that were adjusted for each run to achieve the target blend ratio of poly(etheretherketone) to poly(biphenyletherdisulfone). The two individual polymers were also run through the extruder to generate the compounded controls for the compositions. Chopped fiberglass from Saint Gobain (Grade SGVA 910) was metered into the extruder barrel at barrel 5 for each of the formulations to achieve a fiberglass loading level of 30 wt. % in each formulation. 0.2% zinc oxide based on the total weight of each formulation was also added during compounding by pre-blending into the poly(biphenyletherdisulfone) powder feed (or the poly(etheretherketone) powder feed in the case of the poly(etheretherketone) control).

The compounding conditions for all the polymer compositions in accordance with the present invention and controls are shown in Table 2. The set points on the extruder were the same for all the runs. The total throughput rate through the extruder was about 20 lb/hr for each of the five example formulations (E3) to (E7), and two controls (R3) and (R4).

**Table 2**

| Compounding run parameters used for compounding of VICTREX^{®} 150 P PEEK poly(etheretherketone) homopolymer and SUPRADEL^{®} HTS-2601P poly(biphenyletherdisulfone), and controls. | | |
|---|---|---|
| | Set Point | Actual |
| Barrel 2 Temp. (°C) | 350 | 329-335 |
| Barrel 3 Temp. (°C) | 380 | 376-380 |
| Barrel 4 Temp. (°C) | 400 | 398-402 |
| Barrel 5 Temp. (°C) | 400 | 363-367 |
| Barrel 6 Temp. (°C) | 400 | 400-401 |
| Barrel 7 Temp. (°C) | 380 | 379-383 |
| Barrel 8 Temp. (°C) | 380 | 380-389 |
| Die Adapter (°C) | 380 | 380-381 |
| Die (°C) | 380 | 340-344 |
| Screw Speed (RPM) | 225 | 225 |
| Drive Power Draw (Amp) | --- | 7-9 |
| Vacuum (in Hg) | --- | 26 |
| Die Pressure (psi) | --- | 491-581 |
| Melt Temperature (°C) | | 421-434 |

For the avoidance of doubt, the detailed formulations the polymer compositions prepared in this second set of examples are shown in Table 3.

**Table 3**

| Detailed formulations of the glass reinforced polymer compositions based on VICTREX^{®} 150 P PEEK poly(etheretherketone) homopolymer and SUPRADEL^{®} HTS-2601P poly(biphenyletherdisulfone), and controls | | | | | | | |
|---|---|---|---|---|---|---|---|
| Sample denomination | Control (R3) | Polymer comp. (E3) | Polymer comp. (E4) | Polymer comp. (E5) | Polymer comp. (E6) | Polymer comp. (E7) | Control (R4) |
| Ingredients | | | | | | | |
| VICTREX^{®} 150 P PEEK poly(etheretherketone) homopolymer | 69.8 | 38.5 | 34.9 | 31.3 | 27.9 | 24.4 | --- |
| SUPRADEL^{®} HTS-2601P poly(biphenyletherdisulfone) | --- | 31.3 | 34.9 | 38.5 | 41.9 | 45.4 | 69.8 |
| CERTAINTEED 910 Fiberglass | 30.0 | 30.0 | 30.0 | 30.0 | 30.0 | 30.0 | 30.0 |
| Zinc Oxide | 0.2 | 0.2 | 0.2 | 0.2 | 0.2 | 0.2 | 0.2 |
| Poly(etheretherketone) / poly(biphenyletherdisulfone) weight ratio | 100/0 | 55/45 | 55/45 | 45/55 | 40/60 | 35/65 | 0/100 |

Pellets from each polymer composition obtained from the above described compounding process were dried in a desiccated force air oven overnight at a temperature of 150°C.

ASTM Type I tensile and flexural specimens 0.125 inch in thickness were then injection molded using a 150 ton Toshiba injection molding machine. Injection molding machine barrel temperature settings were set at 690, 700, 710 and 710°F for the rear, middle, front and nozzle zones, respectively for molding all the formulations. The mold temperature was set a 340°F throughout.

The ASTM and other tests performed on all the materials are listed or described in Table 4 except for the environmental stress cracking resistance (ESCR) test.

ESCR testing of the example polymer composition and controls was performed by first mounting the standard ASTM flexural specimens on parabolic fixtures that provide a continuously varying strain from 0 to 2.0%. The samples were held onto the fixtures and maintained at the curvature of the fixture by means of 6-8 metallic hose clamps spanning the length of the parabola. Following mounting the samples on the flex fixtures, the entire assemblies were fully immersed in a solvent for 24 hours and the samples were inspected at the end of the 24 hour immersion period. The point on the flexural samples were cracking or crazing stops was regarded as the critical strain, i.e. the maximum strain the material can withstand in that particular solvent. The test was conducted using independent samples in each of 4 different aggressive organic solvent environments which are listed in Table 5.

**Table 4**

| Mechanical properties of the fiberglass-reinforced polymer compositions | | | | | | | | |
|---|---|---|---|---|---|---|---|---|
| Sample denomination | | Control (R3) | Polymer comp. (E3) | Polymer comp. (E4) | Polymer comp. (E5) | Polymer comp. (E6) | Polymer comp. (E7) | Control (R4) |
| Poly(etheretherketone) / poly(biphenyletherdisulfone) weight ratio | | 100 / 0 | 55 / 45 | 50 / 50 | 45 / 55 | 40 / 60 | 35 / 65 | 0 / 100 |

| ***Property*** | ***ASTM Method*** | | | | | | | |
|---|---|---|---|---|---|---|---|---|
| Tensile strength (psi) | D-638 | 25800 | 23200 | 22800 | 23700 | 23400 | 23000 | 16300 |
| Tensile modulus (Ksi) | D-638 | 1650 | 1570 | 1570 | 1590 | 1530 | 1530 | 1280 |
| Tensile elongation at break (%) | D-638 | 2.4 | 2.1 | 2.0 | 2.1 | 2.2 | 2.1 | 2.0 |
| Flexural strength (psi) | D-790 | 36900 | 31600 | 32000 | 32700 | 32000 | 31900 | 23800 |
| Flexural modulus (Ksi) | D-790 | 1461 | 1325 | 1341 | 1331 | 1280 | 1264 | 1127 |
| Flexural strain at break (%) | D-790 | 2.9 | 2.7 | 2.7 | 2.8 | 2.9 | 2.9 | 2.5 |
| No notch Izod (ft-lb/in) | D-4812 | 15.4 | 16.5 | 16.5 | 18.0 | 17.3 | 17.2 | 8.2 |
| Viscosity at 410°C and 50 sec⁻¹ (Pa-s) | --- | 635 | 1086 | 1138 | 1251 | 1265 | 1370 | 2240 |
| Heat Deflection Temperature (°C), annealed at 240 C/1 hr | D-648 | > 300 | 257 | 254 | 254 | 252 | 252 | 262 |

The melt viscosity at 410°C and 50 s-1 shear rate was measured in a capillary rheometer. A 0.04 inch diameter x 0.8 inch length die was used with a 120° entrance angle. No dwell time was applied other than a 5 minute heat up/melting time.

The example glass fiber reinforced polymer compositions exhibited an outstanding balance of properties. In particular, they showed surprisingly no notch IZOD values higher than that the no notch IZOD value of not only the poly(biphenyletherdisulfone) control (R4), but also somewhat higher than the poly(etheretherketone) (R3) (synergistic effect). They showed further surprisingly high tensile strength, high tensile modulus, high flexural strength, and high flexural modulus, all much higher than expected from a proportional rule, on the basis of the corresponding mechanical properties of the poly(etheretherketone) and the poly(biphenyletherdisulfone) controls and the poly(etheretherketone) / poly(biphenyletherdisulfone) weight ratio.

**Table 5**

| Environmental stress cracking resistance of the fiberglass-reinforced polymer compositions | | | | | | | |
|---|---|---|---|---|---|---|---|
| Sample denomination | Control (R3) | Polymer comp. (E3) | Polymer comp. (E4) | Polymer comp. (E5) | Polymer comp. (E6) | Polymer comp. (E7) | Control (R4) |
| Poly(etheretherketone) / poly(biphenyletherdisulfone) weight ratio | 100 / 0 | 55 / 45 | 50 / 50 | 45 / 55 | 40 / 60 | 35 / 65 | 0 / 100 |
| ***ESCR results*** | | | | | | | |
| ***MEK, 24 hr*** | | | | | | | |
| Critical Strain (%) | > 2.0 (NE) | > 2.0 (NE) | > 2.0 (NE) | > 2.0 (NE) | > 2.0 (NE) | > 2.0 (NE) | 1.1 (CRK) |
| ***Toluene, 24 hr*** | | | | | | | |
| Critical Strain (%) | > 2.0 (NE) | > 2.0 (NE) | > 2.0 (NE) | > 2.0 (NE) | > 2.0 (NE) | > 2.0 (NE) | 1.1 (CRK) |
| ***Chloroform, 24 hr*** | | | | | | | |
| Critical Strain (%) | > 2.0 (NE) | > 2.0 (NE) | > 2.0 (NE) | > 2.0 (NE) | > 2.0 (NE) | > 2.0 (NE) | Dissolved |
| ***Ethyl Acetate, 24 hr*** | | | | | | | |
| Critical Strain (%) | > 2.0 (NE) | > 2.0 (NE) | > 2.0 (NE) | > 2.0 (NE) | > 2.0 (NE) | > 2.0 (NE) | > 2.0 (NE) |

| | | | | | | | |
|---|---|---|---|---|---|---|---|
| NE : On these samples, no signs of failure were observed up to the maximum applied flexural strain of 2.0%. CRK : Samples cracked at the indicated strain level. | | | | | | | |

Surprisingly, likewise the poly(etheretherketone)-based control, the example polymer compositions, although they contained a quite high amount of poly(biphenyletherdisulfone) [poly(etheretherketone) / poly(biphenyletherdisulfone) weight ratio up to 35 / 65], did not show any sign of failure when the maximum starin was applied, including in very aggressive chemical environments like toluene, chloroform and ethyl acetate.

All references, patents, applications, tests, standards, documents, publications, brochures, texts, articles, etc. mentioned herein are incorporated herein by reference. Where a numerical limit or range is stated, all values and subranges within a numerical limit or range are specifically included as if explicitly written out.

Obviously, numerous modifications and variations of the present invention are possible in light of the above teachings. It is therefore to be understood that within the scope of the appended claims, the invention may be practiced otherwise than as specifically described herein.

### Third set of examples.

Two fiber-filled polymer compositions were prepared in accordance with the present invention.

Both contained:
- a poly(etheretherketone) synthesized by a method comprising nucleophilically polycondensing hydroquinone with difluorobenzophenone,
- a high glass temperature sulfone polymer synthesized by a method comprising nucleophilically polycondensing 4,4'-bis[(4-chlorophenylsulfonyl)]-1,1'-biphenyl with one or more diols, and
- 30 wt. %, based on the total weight of the polymer composition, of a fibrous filler.

In the polymer composition (E8), the fibrous filler was glass fiber. On the other hand, the fibrous filler of polymer composition (E9) was carbon fiber.

Polymer compositions (E8) and (E9) will be commercially available from SOLVAY ADVANCED POLYMERS, L.L.C., respectively as AVASPIRE™ AV-848 GF30 BG20 and CF30 NT.

Fiber-reinforced poly(etheretherketone)s were used as controls. Control (R5) comprised 30 wt. %, based on the total weight of (R5), of glass fiber, while control (R6) comprised 30 wt. %, based on the total weight of (R6), of carbon fiber.

Elevated tempeature properties of polymer compositions (E8) and (E9) were compared to filled PEEKs (R5) and (R6). The results are listed in Table 6 below.

**Table 6**

| | Glass Fiber Reinforced | | Carbon Fiber Reinforced | |
|---|---|---|---|---|
| | Polymer composition | Polymer composition | Polymer composition | Polymer composition |
| Sample denomination | (E8) | (R5) | (E9) | (R6) |
| Tensile Modulus (kpsi) ASTM D 638 | | | | |
| 180°C | 646 | 345 | 982 | 433 |
| 210°C | 417 | 248 | 554 | 295 |
| 240°C | 254 | 201 | 398 | 238 |
| | | | | |
| Tensile Strength (psi) | | | | |
| ASTM D 638 | | | | |
| 180°C | 9700 | 8100 | 8700 | 9500 |
| 210°C | 8300 | 7700 | 6600 | 8600 |
| 240°C | 6200 | 7000 | 4100 | 7600 |

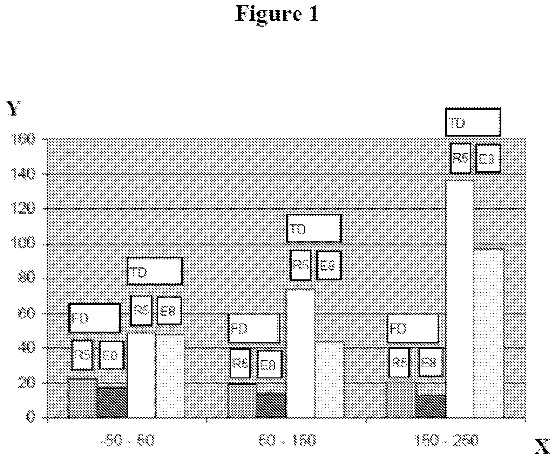

A CLTE histogramm providing the coefficients of linear thermal expansion (CLTE) of the 30 wt. % glass fiber-filled polymer composition (E8) (according to the invention), compared to the 30 wt. % glass fiber-filled PEEK (R5), is presented in Figure 1. The CLTEs (in ppm/°C) were plotted in Y-axis; it was distinguished beween the CLTE in the flow direction ("FD" on the histogramm) and the CLTE in the tarnsverse direction ("TD" on the histogramm). Different values were measured corresponding to different temperature ranges (X-axis) : from about -50 to about +50°C, from about +50 to about +150°C, and from about +150 to about +250°C. It was shown that glass fiber-filled polymer composition (E8) had a lower CLTE than the corresponding glass fiber-filled PEEK control (R5), both in the flow and in the transverse direction, especially at high temperature.

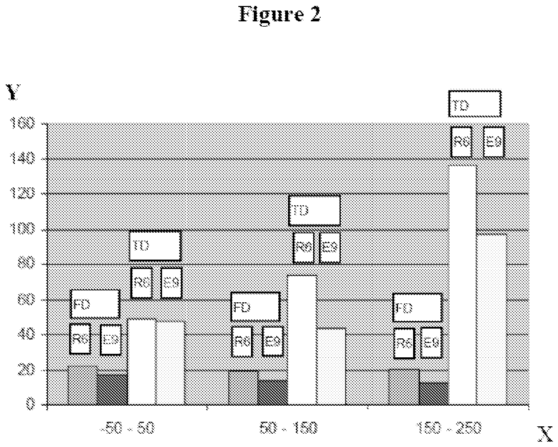

Another CLTE histogramm providing the coefficients of linear thermal expansion (CLTE) of the 30 wt. % carbon filled polymer composition (E9) (according to the invention), compared to the 30 wt. % carbon filled PEEK (R6), is presented in Figure 2. The CLTEs (in ppm/°C) were plotted in Y-axis; it was distinguished beween the CLTE in the flow direction ("FD" on the histogramm) and the CLTE in the tarnsverse direction ("TD" on the histogramm). Different values were measured corresponding to different temperature ranges (X-axis) : from about -50 to about +50°C, from about +50 to about +150°C, and from about +150 to about +250°C. It was also shown that carbon fiber-filled polymer composition (E9) had a lower CLTE than the corresponding carbon fiber-filled PEEK control (R6), both in the flow and in the transverse direction, especially at high temperature.

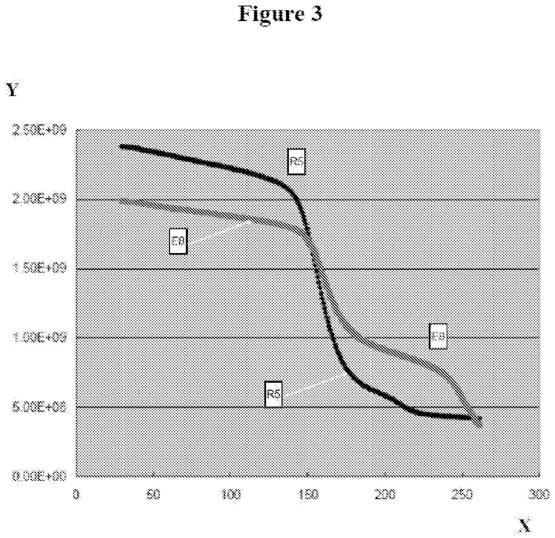

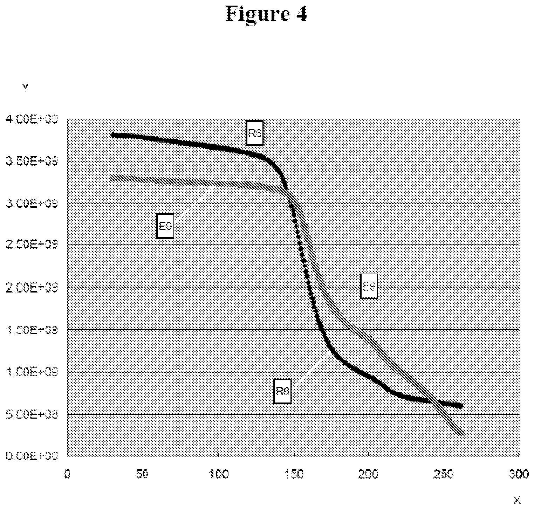

Dynamic mechanical thermal analysis (DMTA) curves were determined for:
- the 30 wt. % glass filled polymer composition (E8) (according to the invention), compared to the 30 wt. % glass filled-PEEK (R5) on one hand (figure 3),
   and
- the 30 wt. % carbon fiber-filled polymer composition (E9) (according to the invention), compared to the 30 wt. % carbon filled-PEEK (R6) on the other hand (figure 4),
   wherein :
   - the storage shear modulus (G'), expressed in Pa, was plotted in Y-axis, and
   - the temperature, expresssed in °C, was plotted in X-axis.

A wide range of mechanical properties were further measured for polymer compositions (E8) and (E9). The results are summarized in Table 7 below.

**Table 7**

| Denomination | | Polymer composition (E8) | Polymer composition (E9) |
|---|---|---|---|
| | | Glass Fiber Reinforced | Carbon Fiber Reinforced |
| Property | Units | | |
| Tensile Strength | psi | 24,400 | 25,500 |
| ASTM D 638 | MPa | 168 | 176 |
| | | | |
| Tensile Modulus | kpsi | 1,540 | 2,730 |
| ASTM D 638 | GPa | 10.6 | 18.8 |
| | | | |
| Tensile Elongation | % | 2.3 | 1.5 |
| ASTM D 638 | | | |
| | | | |
| Flexural Strength | psi | 34,600 | 37,600 |
| ASTM D 790 | MPa | 239 | 259 |
| | | | |
| Flexural Modulus | kpsi | 1,430 | 2,400 |
| ASTM D 790 | GPa | 9.9 | 16.5 |
| | | | |
| Flexural Strain at Break | % | 2.8 | 1.9 |
| ASTM D 790 | | | |
| | | | |
| Izod Impact, Notched | ft-lb/in | 1.3 | 0.8 |
| ASTM D 256 | J/m | 69 | 43 |
| | | | |
| Izod Impact, Unnotched | ft-lb/in | 18 | 10 |
| ASTM D 256 | J/m | 960 | 530 |
| | | | |
| Heal Deflection Temperature | °F | 495 | 495 |
| at 264 psi, ASTM D 648 | °C | 257 | 257 |
| | | | |
| Melt Flow at 400°C, 2.16 kg | g/10 min | 7.0 | 2.5 |
| ASTM D 1238 | | | |
| | | | |
| Specific Gravity | | 1.53 | 1.42 |
| ASTM D 792 | | | |
| | | | |

It can be seen from the above tables and figures that both polymer compositions (E8) and (E9) exhibited an outstanding balance of properties, including increased dimensional stability, higher stiffness and lower CLTE (especially fiom about 150°C to about 250°C), and lower modulus for greater flexibility at room temperature.

The polymer compositions in accordance with the present invention gather unique advantages. They are tailored to meet specific application requirements and bridge price and performance gaps. They provide design engineers with an alternative to reinforced PEEK, specifically in demanding applications that require superior toughness, higher structural integrity, and exceptional chemical resistance. Besides, they can be easily processed using standard thermoplastic melt processing techniques, including injection molding and extrusion.

## Claims

1. Polymer blend (B) consisting of:
- at least one poly(aryletherketone) (P1), and
- at least one high glass temperature sulfone polymer (P2) having a glass transition temperature of at least 240°C, said high glass temperature sulfone polymer (P2) being a polycondensation polymer of which more than 50 wt. % of the recurring units are recurring units (R2) of one or more formulae of the general type : 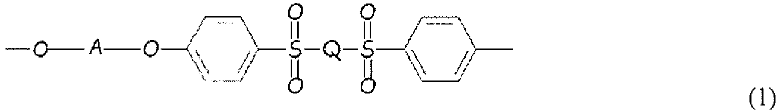 wherein **A** and **Q**, equal or different, are divalent groups of the general formula
-Ar(-X)ₐ₁(-Ar')ₐ₂-
wherein :
▪ Ar and Ar', equal or different, are C₆-C₃₀ arylene segments ;
▪ X is O, S, C(=O), S(=O)₂, C≡C, CH=CH, C₁-C₆ alkylene, C₁-C₆ perfluoroalkylene, or partially fluorinated C₁-C₆ alkylene ;
▪ a₁ is an integer equal to 0 or 1 ; a₂ is an integer equal to 0 or 1 ; a₂ = 0 when a₁ = 0, and a₂ = 1 when a₁ = 1.

2. Polymer blend (B) according to claim 1, **characterized in that A** and **Q** are chosen among the following structures : 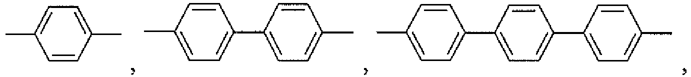 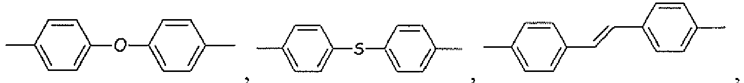 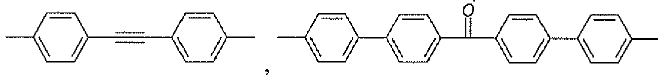 and 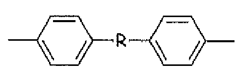 with **R** being

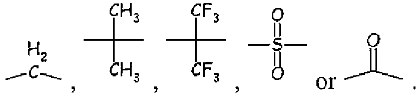

3. Polymer blend (B) according to claim 1, **characterized in that** the high glass temperature sulfone polymer (P2) has a glass transition temperature of at most 275°C.

4. Polymer blend (B) according to claim 1, **characterized in that** the recurring units (R2) are a mix (M67) consisting of arylethertrisulfone recurring units of one or more formulae of the general type : 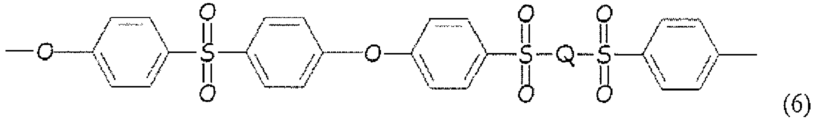 and biphenyletherdisulfone recurring units of one or more formulae of the general type : 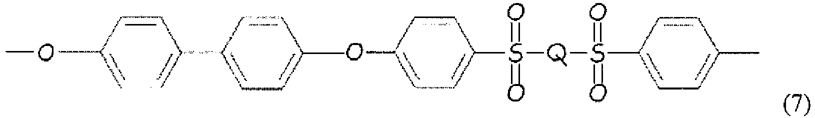 with **Q** as defined in claim 1.

5. Polymer blend (B) according to claim 1, **characterized in that**:
- the poly(aryletherketone) (P1) is a poly(etheretherketone) (P1+) of which more than 50 wt. % of the recurring units are 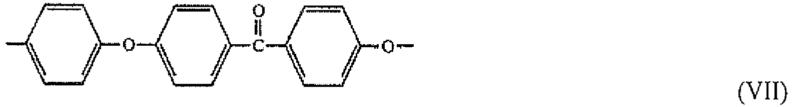 and
- the high glass temperature sulfone polymer (P2) is a poly(arylethertrisulfone)-poly(biphenyletherdisulfone) copolymer (P2+) of which more than 50 wt. % of the recurring units are a mix (M67) consisting of arylethertrisulfone recurring units of one or more formulae of the general type : 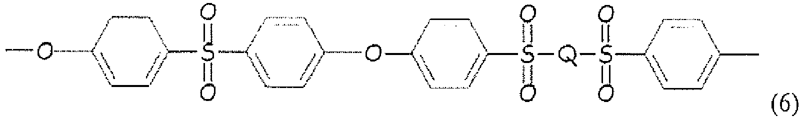 and biphenyletherdisulfone recurring units of one or more formulae of the general type : 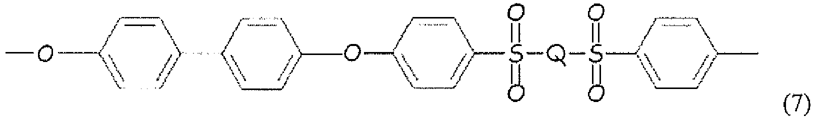 with **Q** as defined in claim 1, and
wherein the weight amount of the recurring units (6) contained in the mix (M67), based on the total amount of the recurring units (6) and (7) of which the mix (M67) consists, ranges from 52 % to 98 %.

6. Polymer blend (B) according to claim 1, **characterized in that** the recurring units (R2) are a mix (M23) consisting of arylethertrisulfone recurring units of formula 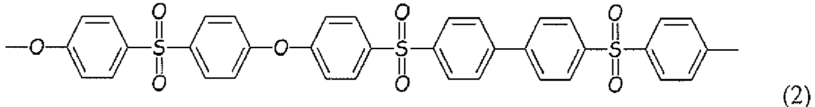 and biphenyletherdisulfone recurring units of formula

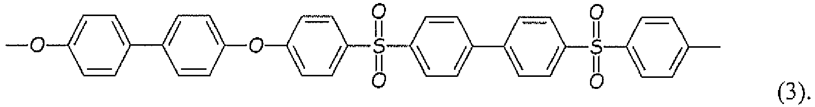

7. Polymer blend (B) according to claim 1, **characterized in that**:
- the poly(aryletherketone) (P1) is a poly(etheretherketone) homopolymer (P1++) of which essentially all, if not all, the recurring units are 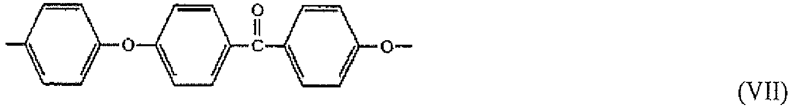 and,
- the high glass temperature sulfone polymer (P2) is a poly(arylethertrisulfone)-poly(biphenyletherdisulfone) copolymer (P2++) of which essentially all, if not all, the recurring units are a mix (M23) consisting of arylethertrisulfone recurring units of formula 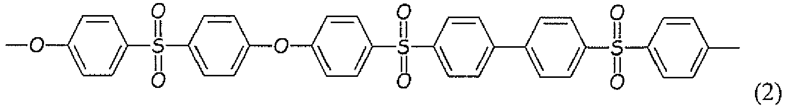 and biphenyletherdisulfone recurring units of formula 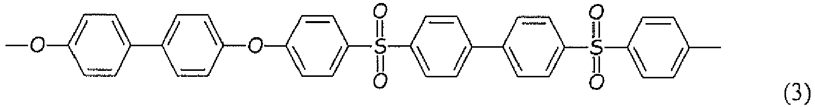 wherein the weight amount of the recurring units (2) contained in the mix (M23), based on the total amount of the recurring units (2) and (3) of which the mix (M23) consists, ranges from 75 % to 95 %, preferably from 87 % to 92 %.

8. Polymer blend (B) according to claim 7, **characterized in that** the poly(arylethertrisulfone)-poly(biphenyletherdisulfone) copolymer (P2⁺⁺) is obtainable by a process comprising the steps of:
(a) preparing a poly(arylethertrisulfone) homoblock of which essentially all, if not all, the recurring units are of formula 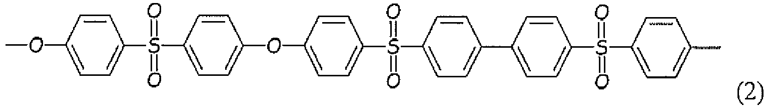 by reacting 4,4'-dihydroxydiphenylsulfone and/or a 4,4'-dialkoxydiphenylsulfone with a 4,4'-bis[(4-halogenophenylsulfonyl)]-1,1'-biphenyl
(b) preparing a poly(biphenyletherdisulfone) homoblock of which essentially all, if not all, the recurring units are of formula 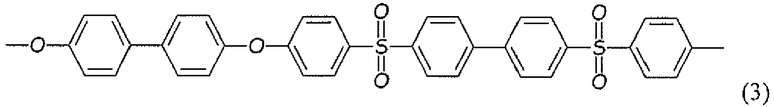 by reacting 4,4'-dihydroxybiphenyl and/or a 4,4'-dialkoxybiphenyl with a 4,4'-bis[(4-halogenophenylsulfonyl)]-1,1'-biphenyl
(c) reacting the aforesaid homoblocks together so as to obtain the copolymer (P2⁺⁺), optionally followed by end-capping it, and
(d) recovering the copolymer (P2⁺⁺).

9. Polymer blend (B) according to claim 7, **characterized in that** the poly(arylethertrisulfone)-poly(biphenyletherdisulfone) copolymer (P2⁺⁺) is a random copolymer.

10. Polymer blend (B) according to claim 1, **characterized in that**:
- the poly(aryletherketone) (P1) is a poly(etheretherketone) (P1+) of which more than 50 wt. % of the recurring units are 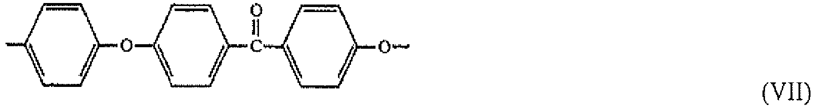 and
- the high glass temperature sulfone polymer (P2) is a poly(biphenyletherdisulfone) of which more than 50 wt. % of the recurring units are biphenyletherdisulfone units of formula

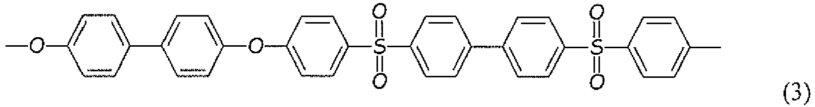

11. Polymer blend (B) according to claim 1, **characterized in that**:
- the poly(aryletherketone) (P1) is a poly(etheretherketone) homopolymer (P1⁺⁺) of which essentially all, if not all, the recurring units are 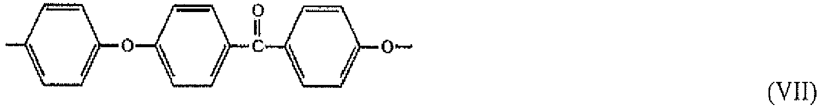 and
- the high glass temperature sulfone polymer (P2) is a poly(biphenyletherdisulfone) homopolymer of which essentially all, if not all, the recurring units are biphenyletherdisulfone units of formula

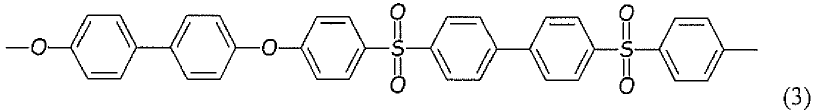

12. Polymer composition (C) consisting of:
- the polymer blend (B) according to any one of claims 1 to 11, and
- at least one ingredient other than the poly(aryletherketone) (P1) and the high glass temperature sulfone polymer (P2),
with the proviso that the polymer composition (C) is free of fibrous carbon nanofiller (N).

13. Polymer composition (C) according to claim 12, **characterized in that** the at least one ingredient other than the poly(aryletherketone) (P1) and the high glass temperature sulfone polymer (P2), is glass fiber or carbon fiber.

14. Polymer composition (C) according to claim 12, **characterized in that** the at least one ingredient other than the poly(aryletherketone) (P1) and the high glass temperature sulfone polymer (P2) is selected from the group consisting of fibrous fillers other than fibrous nanofillers, fibrous nanofillers other than fibrous carbon nanofillers, lubricating agents, anti-wear agents, anti-static agents, extenders, organic pigments, inorganic pigments, acid scavengers, heat stabilizers, antioxidants, light stabilizers, UV stabilizers, gamma-ray stabilizers, flame retardants, smoke-suppressing agents, particulate fillers, nucleating agents, and mixtures thereof.

15. Shaped article consisting of one or more parts, at least one part of the shaped article consisting of the polymer blend (B) according to any one of claims 1 to 11, or of the polymer composition (C) according to any one of claims 12 to 14.

16. Shaped article according to claim 15, **characterized in that** it is selected from the group consisting of injection molded articles, extruded articles, films, fibers, sheet stocks, rod stocks, tubings, profiles, compression molded articles, valve components, related parts of valve components, seal rings, compressor components, pump components, plate valves, ring valves, poppets for suction, discharge components on air compressor, discharge components on refrigeration compressors, discharge components on reciprocating compressors, gaskets, back up rings, sealing components for use in a downhole environment of oil/gas production, electronic components, electronic components for use in a surface mount type circuit assembly, hard drive platter components, head components, components used in semi-conductor manufacturing, cell cassettes, chip carrier trays, electro-statically dissipative components used in semi-conductor manufacturing, components used in semi-conductor test equipment, test sockets, burn-in sockets, fittings and/or couplings used in fluid delivery systems in the chemical process industry or in other industries where hot harsh chemicals and/or steam are present, articles used for cookware or bakeware, downhole abrasion tapes and flexible riser abrasion tapes, under-the-hood automotive components, lighting articles, lighting sockets, LED frames, LED housings, thermally dissipative heat sinks, aerospace electrical and electronic connector components and housings, friction and wear components, bushings, bearings, thrust washers, gears, mechanical drive components, insulation and coatings of electric wires and cables, and insulation and coatings of electronic wires and cables.

## Patentansprüche

1. Polymerblend (B), bestehend aus :
- mindestens einem Poly(aryletherketon) (P1) und
- mindestens einem eine hohe Glastemperatur aufweisenden Sulfonpolymer (P2) mit einer Glasübergangstemperatur von mindestens 240°C, wobei es sich bei dem eine hohe Glasübergangstemperatur aufweisenden Sulfonpolymer (P2) um ein Polykondensationspolymer handelt, wobei es sich bei mehr als 50 Gew.- % der Wiederholungseinheiten um Wiederholungseinheiten (R2) einer oder mehrerer Formeln des folgenden allgemeinen Typs handelt : 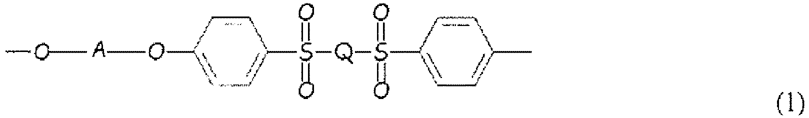 worin A und Q gleich oder verschieden sind und für zweiwertige Gruppen der folgenden allgemeinen Formel stehen :
-Ar(-X)ₐ₁(-Ar')ₐ₂-
worin :
▪ Ar und Ar' gleich oder verschieden sind und für C₆-C₃₀-Arylensegmente stehen;
▪ X für O, S, C(=O), S(=O)₂, C≡C, CH=CH, C₁-C₆-Alkylen, C₁-C₆-Perfluoralkylen oder teilfluoriertes C₁-C₆-Alkylen steht;
▪ a₁ für eine ganze Zahl mit einem Wert von 0 oder 1 steht; a₂ für eine ganze Zahl mit einem Wert von 0 oder 1 steht;
a₂ = 0, wenn a₁ = 0, und a₂ = 1, wenn a₁ = 1.

2. Polymerblend (B) nach Anspruch 1, **dadurch gekennzeichnet, dass** A und Q aus den folgenden Strukturen ausgewählt sind : 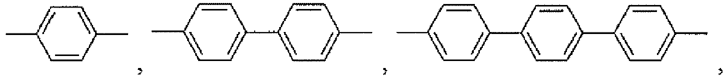 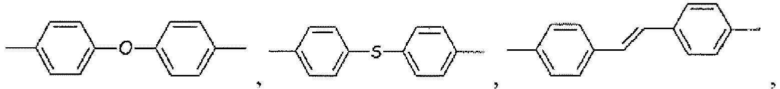 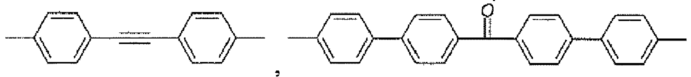 und 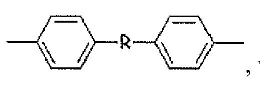 wobei R für 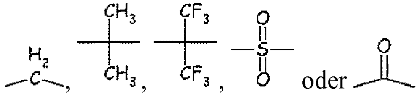 steht.

3. Polymerblend (B) nach Anspruch 1, **dadurch gekennzeichnet, dass** das eine hohe Glastemperatur aufweisende Sulfonpolymer (P2) eine Glasübergangstemperatur von höchstens 275°C aufweist.

4. Polymerblend (B) nach Anspruch 1, **dadurch gekennzeichnet, dass** es sich bei den Wiederholungseinheiten (R2) um eine Mischung (M67) handelt, die aus Arylethertrisulfon-Wiederholungseinheiten einer oder mehrerer Formeln des folgenden allgemeinen Typs : 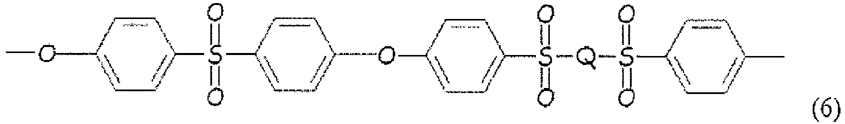 und Biphenyletherdisulfon-Wiederholungseinheiten einer oder mehrerer Formeln des folgenden allgemeinen Typs : 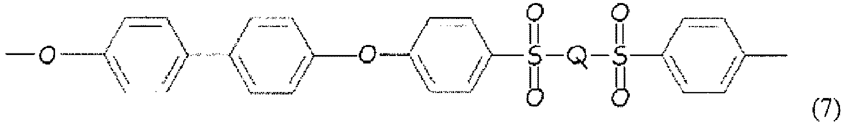 besteht, wobei Q wie in Anspruch 1 definiert ist.

5. Polymerblend (B) nach Anspruch 1, **dadurch gekennzeichnet, dass** :
- es sich bei dem Poly(aryletherketon) (P1) um ein Poly(etheretherketon) (P1+) handelt, wobei es sich bei mehr als 50 Gew.-% der Wiederholungseinheiten um 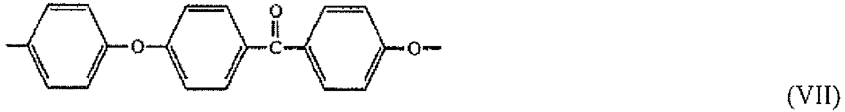 handelt,
und
- es sich bei dem eine hohe Glastemperatur aufweisanden Sulfonpolymer (P2) um ein Poly(arylethertrisulfon)-Poly(biphenyletherdisulfon)-Copolymer (P2+) handelt, wobei es sich bei mehr als 50 Gew.-% der Wiederholungseinheiten um eine Mischung (M67) handelt, die aus Arylethertrisulfon-Wiederholungseinheiten einer oder mehrerer Formeln des folgenden allgemeinen Typs : 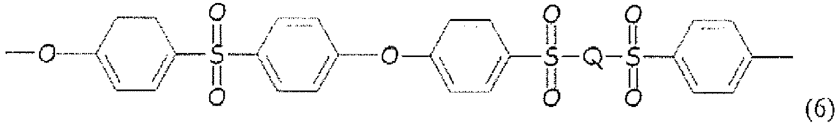 und Biphenyletherdisulfon-Wiederholungseinheiten einer oder mehrerer Formeln des folgenden allgemeinen Typs : 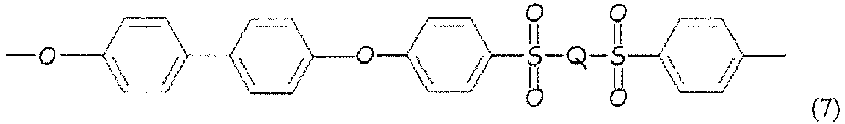 besteht, wobei Q wie in Anspruch 1 definiert ist, und
wobei die Gewichtsmenge der Wiederholungseinheiten (6) in der Mischung (M67), bezogen auf die Gesamtmenge der Wiederholungseinheiten (6) und (7), aus denen die Mischung (M67) besteht, im Bereich von 52 % bis 98 % liegt.

6. Polymerblend (B) nach Anspruch 1, **dadurch gekennzeichnet, dass** es sich bei den Wiederholungseinheiten (R2) um eine Mischung (M23) handelt, die aus Arylethertrisulfon-Wiederholungseinheiten der Formel: 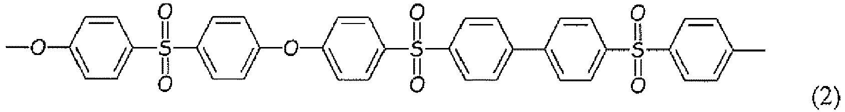 und Biphenyletherdisulfon-Wiederholungseinheiten der Formel: 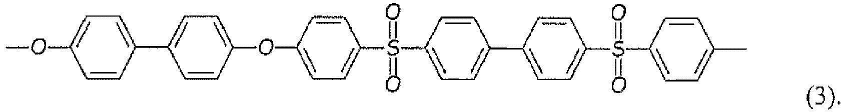 besteht.

7. Polymerblend (B) nach Anspruch 1, **dadurch gekennzeichnet, dass** :
- es sich bei dem Poly(aryletherketon) (P1) um ein Poly(etheretherketon)-Homopolymer (P1++) handelt, wobei es sich bei im Wesentlichen allen, wenn nicht allen, der Wiederholungseinheiten um 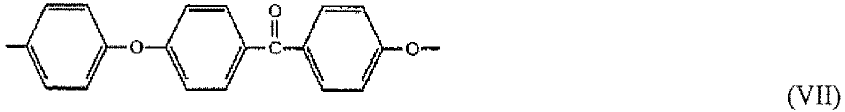 handelt,
und
- es sich bei dem eine hohe Glastemperatur aufweisenden Sulfonpolymer (P2) um ein Poly(arylethertrisulfon)-Poly(biphenyletherdisulfon)-Copolymer (P2++) handelt, wobei es sich bei im Wesentlichen allen, wenn nicht allen, der Wiederholungseinheiten um eine Mischung (M23) handelt, die aus Arylethertrisulfon-Wiederholungseinheiten der Formel: 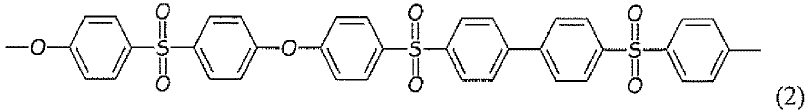 und Biphenyletherdisulfon-Wiederholungseinheiten der Formel: 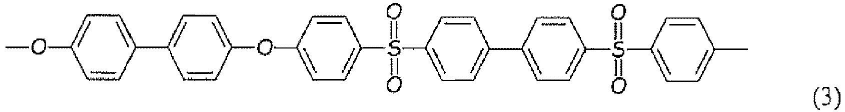 besteht, wobei die Gewichtsmenge der Wiederholungseinheiten (2) in der Mischung (M23), bezogen auf die Gesamtmenge der Wiederholungseinheiten (2) und (3), aus denen die Mischung (M23) besteht, im Bereich von 75 % bis 95 %, vorzugsweise von 87 % bis 92 %, liegt.

8. Polymerblend (B) nach Anspruch 7, **dadurch gekennzeichnet, dass** das Poly(arylethertrisulfon)-Poly(biphenyletherdisulfon)-Copolymer (P2⁺⁺) erhältlich ist durch ein Verfahren, das folgende Schritte umfasst :
(a) Herstellen eines Poly(arylethertrisulfon)-Homoblocks, wobei im Wesentlichen alle, wenn nicht alle, der Wiederholungseinheiten die Formel 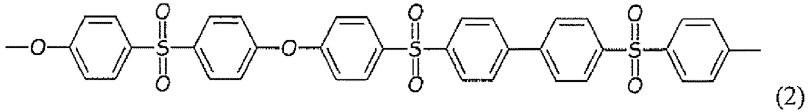 aufweisen, durch Umsetzen von 4,4'-Dihydroxydiphenylsulfon und/oder einem 4,4'-Dialkoxydiphenylsulfon mit einem 4,4'-Bis[(4-halogeno-phenylsulfonyl)]-1,1'-diphenyl,
(b) Herstellen eines Poly(biphenyletherdisulfon)-Homoblocks, wobei im Wesentlichen alle, wenn nicht alle, der Wiederholungseinheiten die Formel 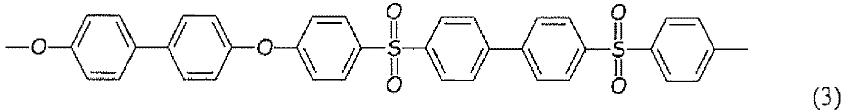 aufweisen, durch Umsetzen von 4,4'-Dihydroxybiphenyl und/oder einem 4,4'-Dialkoxybiphenyl mit einem 4,4'-Bis[(4-halogenophenylsulfonyl)]-1,1'-biphenyl,
(c) Umsetzen der obigen Homoblöcke miteinander zum Erhalt des Copolymers (P2⁺⁺) und gegebenenfalls Endgruppenverschließen des Copolymers und
(d) Gewinnen des Copolymers (P2⁺⁺).

9. Polymerblend (B) nach Anspruch 7, **dadurch gekennzeichnet, dass** es sich bei dem Poly(arylethertrisulfon)-Poly(biphenyletherdisulfon)-Copolymer (P2++) um ein statistisch aufgebautes Copolymer handelt.

10. Polymerblend (B) nach Anspruch 1, **dadurch gekennzeichnet, dass** :
- es sich bei dem Poly(aryletherketon) (P1) um ein Poly(etheretherketon) (P1+) handelt, wobei es sich bei mehr als 50 Gew.- % der Wiederholungseinheiten um 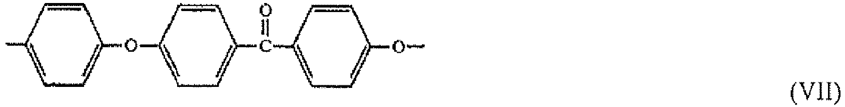 handelt,
und
- es sich bei dem eine hohe Glastemperatur aufweisenden Sulfonpolymer (P2) um ein Poly(biphenyletherdisulfon)-Copolymer handelt, wobei es sich bei mehr als 50 Gew.- % der Wiederholungseinheiten um Biphenyletherdisulfon-Einheiten der Formel 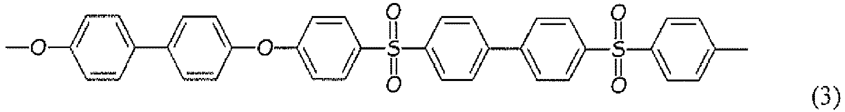 handelt.

11. Polymerblend (B) nach Anspruch 1, **dadurch gekennzeichnet, dass** :
- es sich bei dem Poly(aryletherketon) (P1) um ein Poly(etheretherketon)-Homopolymer (P1++) handelt, wobei es sich bei im Wesentlichen allen, wenn nicht allen, der Wiederholungseinheiten um 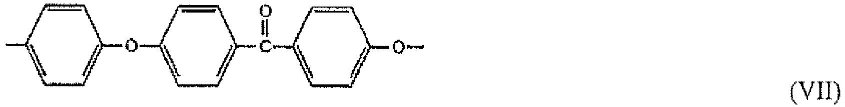 handelt,
und
- es sich bei dem eine hohe Glastemperatur aufweisenden Sulfonpolymer (P2) um ein Poly(biphenyletherdisulfon)-Copolymer handelt, wobei es sich bei im Wesentlichen allen, wenn nicht allen, der Wiederholungseinheiten um Biphenyletherdisulfon-Einheiten der Formel 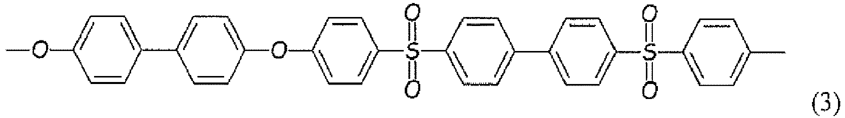 handelt.

12. Polymerzusammensetzung (C), bestehend aus :
- dem Polymerblend (B) nach einem der Ansprüche 1 bis 11 und
- mindestens einem Bestandteil, der von dem Poly(aryletherketon) (P1) und dem eine hohe Glastemperatur aufweisenden Sulfonpolymer (P2) verschieden ist,
mit der Maßgabe, dass die Polymerzusammensetzung (C) frei von faserförmigem Kohlenstoff-Nanofüllstoff (N) ist.

13. Polymerzusammensetzung (C) nach Anspruch 1, **dadurch gekennzeichnet, dass** es sich bei dem mindestens einen Bestandteil, der von dem Poly(aryletherketon) (P1) und dem eine hohe Glastemperatur aufweisenden Sulfonpolymer (P2) verschieden ist, um Glasfaser oder Kohlenstofffaser handelt.

14. Polymerzusammensetzung (C) nach Anspruch 12, **dadurch gekennzeichnet, dass** der mindestens eine Bestandteil, der von dem Poly-(aryletherketon) (P1) und dem eine hohe Glastemperatur aufweisenden Sulfonpolymer (P2) verschieden ist, aus der Gruppe bestehend aus faserförmigen Füllstoffen, die von faserförmigen Nanofüllstoffen verschieden sind, faserförmigen Nanofüllstoffen, die von faserförmigen Kohlenstoff-Nanofüllstoffen verschieden sind, Schmiermitteln, Verschleißschutzmitteln, Antistatika, Streckmitteln, organischen Pigmenten, anorganischen Pigmenten, Säurefängern, Wärmestabilisatoren, Antioxidantien, Lichtschutzmitteln, UV-Stabilisatoren, Gammastrahlen-Stabilisatoren, Flammschutzmitteln, Rauchunterdrückungsmitteln, teilchenförmigen Füllstoffen, Nukleierungsmitteln und Mischungen davon ausgewählt ist.

15. Formkörper aus einem oder mehreren Teilen, wobei mindestens ein Teil des Formkörpers aus dem Polymerblend (B) nach einem der Ansprüche 1 bis 11 oder der Polymerzusammensetzung (C) nach einem der Ansprüche 12 bis 14 besteht.

16. Formkörper nach Anspruch 15, **dadurch gekennzeichnet, dass** er ausgewählt ist aus der Gruppe bestehend aus spritzgegossenen Artikeln, extrudierten Artikeln, Folien, Fasern, Rohmaterialien für Flächengebilde, Rohmaterialien für Stäbe, Rohrleitungen, Profilen, formgepressten Artikeln, Ventilkomponenten, zugehörigen Teilen von Ventilkomponenten, Dichtungsringen, Verdichterkomponenten, Pumpenkomponenten, Plattenventilen, Ringventilen, Ventilkegeln zum Ansaugen, Austragskomponenten an Luftverdichtern, Austragskomponenten an Kältemittelverdichtern, Austragskomponenten an Hubkolbenverdichtern, Dichtungen, Back-up-Ringen, Abdichtungskomponenten zur Verwendung in einer Bohrlochumgebung bei der Öl/Gas-Förderung, Elektronikkomponenten, Elektronikkomponenten zur Verwendung in einer Schaltkreisanordnung vom Oberflächenmontagetyp, Festplattenkomponenten, Kopfkomponenten, Komponenten, die bei der Halbleiterfertigung verwendet werden, Zellkassetten, Chipträgerwannen, elektrostatisch ableitenden Komponenten, die bei der Halbleiterfertigung verwendet werden, Komponenten, die in Halbleitertesteinrichtungen verwendet werden, Testsockeln, Burn-in-Sockeln, Armaturen und/oder Kupplungen, die in Fluidzuführungssystemen in der chemischen Verfahrenstechnik oder in anderen Industriezweigen, wo heiße scharfe Chemikalien und/oder Wasserdampf vorliegen, Artikeln, die für Kochgeschirr oder Backformen verwendet werden, Bohrloch-Schleifbändern und Schleifbändern für flexible Steigleitungen, Motorraum-Automobilkomponenten, Beleuchtungsartikeln, Beleuchtungssockeln, LED-Rahmen, LED-Gehäusen, wärmeableitenden Wärmesenken, elektrischen und elektronischen und Gehäusen für die Luft- und Raumfahrt, Reibungs- und Verschleißkomponenten, Laufboxen, Lagern, Auswuchtscheiben, Zahnrädern, Komponenten von mechanischen Antrieben, Isolierungen und Beschichtungen von Elektrodrähten und -kabeln und Isolierungen und Beschichtungen von Elektronikdrähten und - kabeln.

## Revendications

1. Mélange de polymères (B) consistant en :
- au moins une poly(aryléthercétone) (P1), et
- au moins un polymère de sulfone de haute température de transition vitreuse (P2) ayant une température de transition vitreuse d'au moins 240°C, ledit polymère de sulfone de haute température de transition vitreuse (P2) étant un polymère de polycondensation dont 50 % en poids des motifs récurrents sont des motifs récurrents (R2) d'une ou de plusieurs formules du type général : 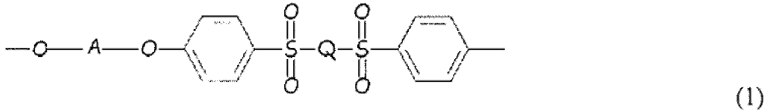 dans lesquelles A et Q, identiques ou différents, sont des groupes divalents de formule générale
-Ar(-X)ₐ₁(-Ar')ₐ₂-
dans laquelle :
▪ Ar et Ar', identiques ou différents, sont des segments C₆-C₃₀ arylène ;
▪ X est O, S, C(=O), S(=O)₂, C≡C, CH=CH, C₁-C₆ alkylène, C₁-C₆ perfluoroalkylène, ou C₁-C₆ alkylène partiellement fluoré ;
▪ a₁ est un nombre entier égal à 0 ou 1 ; a₂ est un nombre entier égal à 0 on 1 ;
a₂ = 0 lorsque a₁ = 0, et a₂ = 1 lorsque a₁ = 1.

2. Mélange de polymères (B) selon la revendication 1, **caractérisé en ce que** A et Q sont choisis parmi les structures suivantes : 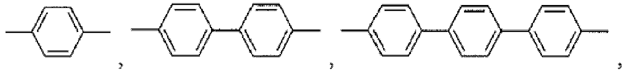 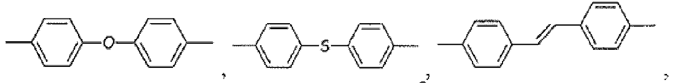 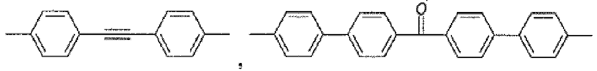 et 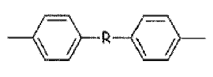 avec R étant

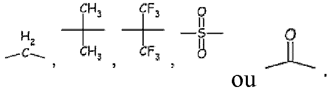

3. Mélange de polymères (B) selon la revendication 1, **caractérisé en ce que** le polymère de sulfone de haute température de transition vitreuse (P2) a une température de transition vitreuse d'au plus 275°C.

4. Mélange de polymères (B) selon la revendication 1, **caractérisé en ce que** les motifs récurrents (R2) sont un mélange (M67) consistant en des motifs récurrents aryléthertrisulfone d'une ou de plusieurs formules du type général : 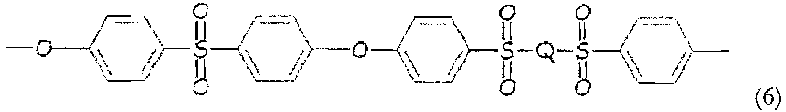 et des motifs récurrents biphénylétherdisulfone d'une ou de plusieurs formules du type général : 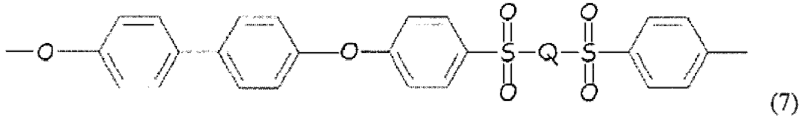 avec Q tel que défini dans la revendication 1.

5. Mélange de polymères (B) selon la revendication 1, **caractérisé en ce que** :
- la poly(aryléthercétone) (P1) est une poly(étheréthercétone) (P1+) dont plus de 50 % en poids des motifs récurrents sont 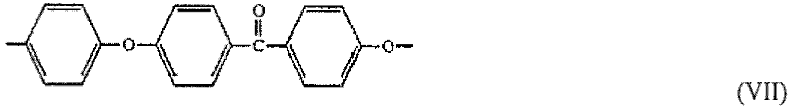 et
- le polymère de sulfone de haute température de transition vitreuse (P2) est un copolymère poly(aryléthertrisulfone)-poly(biphénylétherdisulfone) (P2+) dont plus de 50 % en poids des motifs récurrents sont un mélange (M67) consistant en des motifs récurrents aryléthertrisulfone d'une ou de plusieurs formules du type général : 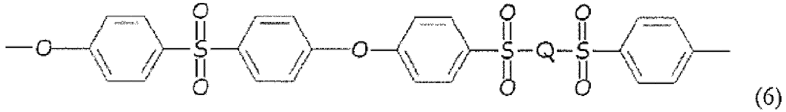 et des motifs récurrents biphénylétherdisulfone d'une ou de plusieurs formules du type général : 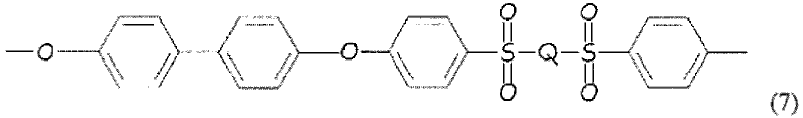 avec Q tel que défini dans la revendication 1 ; et
dans lequel la quantité en poids des motifs récurrents (6) contenus dans le mélange (M67), par rapport à la quantité totale des motifs récurrents (6) et (7) dont le mélange (M67) est constitué, va de 52 % à 98 %.

6. Mélange de polymères (B) selon la revendication 1, **caractérisé en ce que** les motifs récurrents (R2) sont un mélange (M23) consistant en des motifs récurrents aryléthertrisulfone de formule 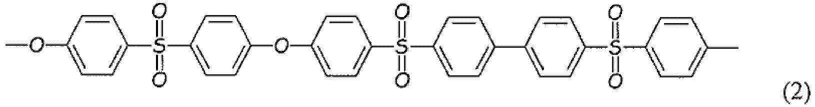 et des motifs récurrents biphénylétherdisulfone de formule

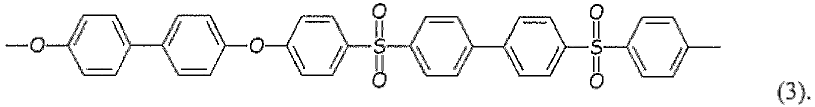

7. Mélange de polymères (B) selon la revendication 1, **caractérisé en ce que** :
- la poly(aryléthercétone) (P1) est un homopolymère poly(étheréthercétone) (P1++) dont essentiellement tous, sinon tous, les motifs récurrents sont 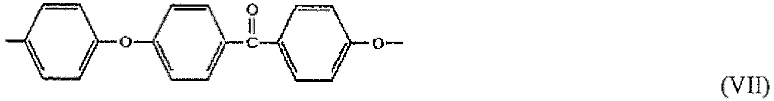 et,
- le polymère de sulfone de haute température de transition vitreuse (P2) est un copolymère poly(aryléthertrisulfone)-poly(biphénylétherdisulfone) (P2++) dont essentiellement tous, sinon tous, les motifs récurrents sont un mélange (M23) consistant en des motifs récurrents aryléthertrisulfone de formule : 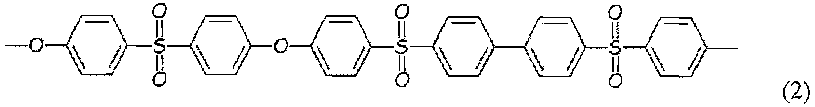 et des motifs récurrents biphénylétherdisulfone de formule 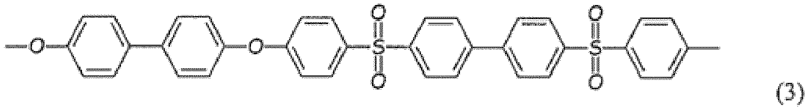 dans lequel la quantité en poids des motifs récurrents (2) contenus dans le mélange (M23), par rapport à la quantité totale des motifs récurrents (2) et (3) dont le mélange (M23) est constitué, va de 75 % à 95 %, de préférence de 87 % à 92 %.

8. Mélange de polymères (B) selon la revendication 7, **caractérisé en ce que** le copolymère poly(aryléthertrisulfone)-poly(biphénylétherdisulfone) (P2⁺⁺) peut être obtenu par un procédé comprenant les étapes de :
(a) préparation d'une homoséquence de poly(aryléthertrisulfone) dont essentiellement tous, sinon tous, les motifs récurrents sont de formule 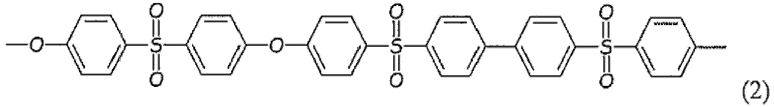 par réaction de 4,4'-dihydroxydiphénylsulfone et/ou d'une 4,4'dialcoxydiphénylsulfone avec un 4,4'-bis[(4-halogénophénylsulfonyl)]-1,1'-biphényle
(b) préparation d'une homoséquence de poly(biphénylétherdisulfone) dont essentiellement tous, sinon tous, les motifs récurrents sont de formule 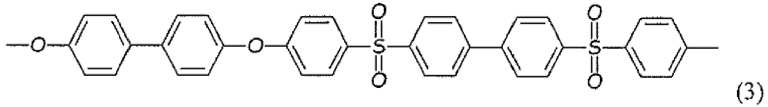 par réaction de 4,4'-dihydroxybiphényle et/ou d'un 4,4'-dialcoxybiphényle avec un 4,4'-bis[(4-halogénophénylsulfonyl)]-1,1'-biphényle
(c) réaction des homoséquences précitées ensemble de manière à obtenir le copolymère (P2⁺⁺), facultativement suivie par son coiffage, et
(d) récupération du copolymère (P2⁺⁺).

9. Mélange de polymères (B) selon la revendication 7, **caractérisé en ce que** le copolymère poly(aryléthertrisulfone)-poly(biphénylétherdisulfone) (P2⁺⁺) est un copolymère statistique.

10. Mélange de polymères (B) selon la revendication 1, **caractérisé en ce que** :
- la poly(aryléthercétone) (P1) est une poly(étheréthercétone) (P1+) dont plus de 50 % en poids des motifs récurrents sont 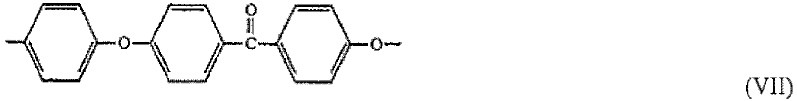 et
- le polymère de sulfone de haute température de transition vitreuse (P2) est une poly(biphénylétherdisulfone) dont plus de 50 % en poids des motifs récurrents sont des motifs biphénylétherdisulfone de formule :

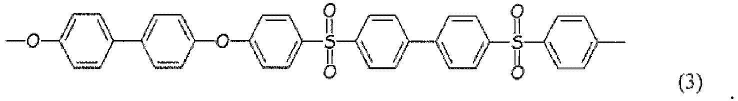

11. Mélange de polymères (B) selon la revendication 1, **caractérisé en ce que** :
- la poly(aryléthercétone) (P1) est un homopolymère de poly(étheréthercétone) (P1++) dont essentiellement tous, sinon tous, les motifs récurrents sont 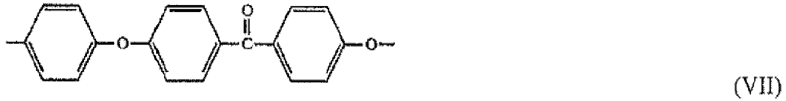 et
- le polymère de sulfone de haute température de transition vitreuse (P2) est un homopolymère poly(biphénylétherdisulfone) dont essentiellement tous, sinon tous, les motifs récurrents sont des motifs biphénylétherdisulfone de formule :

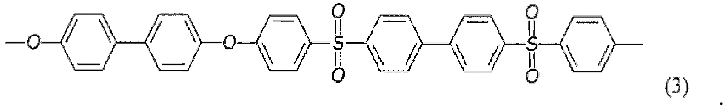

12. Composition de polymère (C) consistant en :
- le mélange de polymères (B) selon l'une quelconque des revendications 1 à 11, est
- au moins un ingrédient autre que la poly(aryléthercétone) (P1) et le polymère de sulfone de haute température de transition vitreuse (P2),
à condition que la composition de polymère (C) soit dépourvue de nanocharges de carbone fibreuses (N).

13. Composition de polymère (C) selon la revendication 12, **caractérisée en ce que** l'au moins un ingrédient autre que la poly(aryléthercétone) (P1) et le polymère de sulfone de haute température de transition vitreuse (P2) est une fibre de verre ou une fibre de carbone.

14. Composition de polymère (C) selon la revendication 12, **caractérisée en ce que** l'au moins un ingrédient autre que la poly(aryléthercétone) (P1) et le polymère de sulfone de haute température de transition vitreuse (P2) est choisi dans le groupe consistant en des charges fibreuses autres que des nanocharges fibreuses, des nanocharges fibreuses autres que des nanocharges de carbone fibreuses, des agents lubrifiants, des agents anti-usure, des agents antistatiques, des agents d'allongement, des pigments organiques, des pigments inorganiques, des neutralisateurs d'acide, des thermostabilisants, des antioxydants, des photostabilisants, des stabilisants anti-UV, des stabilisants de rayons gamma, des produits ignifuges, des agents suppresseurs de fumée, des charges particulaires, des agents de nucléation et leurs mélanges.

15. Article façonné consistant en une ou plusieurs parties, au moins une partie de l'article façonné consistant en le mélange de polymères (B) selon l'une quelconque des revendications 1 à 11, ou la composition de polymère (C) selon l'une quelconque des revendications 12 à 14.

16. Article façonné selon la revendication 15, **caractérisé en ce qu'**il est choisi dans le groupe consistant en les articles moulés par injection, les articles extrudés, les films, les fibres, les matières de feuille, les matières de tige, les tubages, les profilés, les articles moulés par compression, les composants de soupape, les parties apparentées de composants de soupape, les bagues d'étanchéité, les composants de compresseur, les composants de pompe, les soupapes à plaque, les soupapes annulaires, les champignons pour aspiration, les composants d'évacuation sur un compresseur d'air, les composants d'évacuation sur des compresseurs de réfrigération, les composants d'évacuation sur des compresseurs alternatifs, les joints ou garnitures d'étanchéité, les bagues de renfort, les composants d'étanchement à utiliser dans un environnement en fond de puits de production de pétrole/gaz, les composants électroniques, les composants électroniques à utiliser dans un ensemble circuit de type montage en surface, les composants de plateau de disque dur, les composants de tête, les composants utilisés dans la fabrication de semi-conducteurs, les cassettes à cellule, les plateaux de boîtier pavé, les composants électrostatiquement dissipatifs utilisés dans la fabrication de semi-conducteurs, les composés utilisés dans le matériel d'essai de semi-conducteurs, les prises de vérification, les supports de vieillissement, les raccords et/ou couplages utilisés dans des systèmes d'apport de fluide dans l'industrie des procédés chimiques et dans d'autres industries où des produits chimiques agressifs chauds et/ou de la vapeur sont présents, les articles utilisés pour la batterie de cuisine ou des ustensiles de cuisson, les bandes abrasives et de fond de puits et les bandes abrasives flexibles de colonne montante, les composants automobiles sous le capot, les articles d'éclairage, les prises d'éclairage, les cadres pour DEL, les logements pour DEL, les puits de chaleur thermiquement dissipatifs, les composants et logements de connecteurs électroniques aérospatiaux, les composants de frottement et d'usure, les douilles, les paliers et roulements, les rondelles de butée, les engrenages, les composants d'entraînement mécanique, l'isolation et les revêtements de fils et câbles électriques, et l'isolation et les revêtements de fils et câbles électroniques.
